# EUROPÄISCHE PATENTSCHRIFT

(11) **EP 2 697 326 B1**
(45) Veröffentlichungstag und Bekanntmachung des Hinweises auf die Patenterteilung: **17.11.2021**
(21) Anmeldenummer: 12721163.9
(22) Anmeldetag: 12.04.2012
(51) Int. Cl.: C09J 7/00, B65D 77/20

(54) **MATERIALVERBUND UND VERWENDUNG EINES MATERIALVERBUNDS, SOWIE VERPACKUNG MIT MATERIALVERBUND UND VERFAHREN ZUR HERSTELLUNG DER VERPACKUNG**
MATERIAL COMPOSITE AND USE OF A MATERIAL COMPOSITE, AND PACKAGING HAVING A MATERIAL COMPOSITE AND PROCESS FOR PRODUCING THE PACKAGING
MATÉRIAU COMPOSITE ET UTILISATION D'UN MATÉRIAU COMPOSITE, AINSI QU'EMBALLAGE COMPRENANT LE MATÉRIAU COMPOSITE ET PROCÉDÉ DE PRODUCTION DE L'EMBALLAGE

(30) Priorität: 12.04.2011 DE 202011005157 U
(43) Veröffentlichungstag der Anmeldung: 19.02.2014
(73) Patentinhaber: ITW Dynatec GmbH, 40822 Mettmann (DE)
(72) Erfinder: ROTHEN, Josef, 42699 Solingen (DE)
(74) Vertreter: Trinks, Ole
(86) Internationale Anmeldenummer: PCT/EP2012/001591
(87) Internationale Veröffentlichungsnummer: WO 2012/139762

(56) Entgegenhaltungen:
- EP-A1- 1 418 212
- EP-A2- 2 123 727
- WO-A1-97/19867
- WO-A2-2004/080826
- US-A- 5 660 922
- US-A1- 2009 162 595

## Beschreibung

### GEBIET DER ERFINDUNG

Die Erfindung betrifft einen auf der Oberfläche eines Körpers anhaftbaren Materialverbund mit einer flächenhaften Ausdehnung.

Der Materialverbund umfasst eine Verbundfläche, die sich in einer ersten Richtung und in einer zu der ersten Richtung im Wesentlichen senkrecht verlaufenden zweiten Richtung erstreckt. Die Verbundfläche wird beim Anhaften des Materialverbunds an der Oberfläche des Körpers kontaktiert. Außerdem umfasst der Materialverbund eine Verbunddicke, welche sich in eine dritte Richtung erstreckt, die zur Verbundfläche im Wesentlichen senkrecht verläuft respektive zur Verbundflächen-Normalen parallel verläuft. Die Verbundlänge, Verbundbreite und die Verbunddicke bilden die Materialverbundmaße, d. h. die Gesamtabmessungen des Materialverbunds. Die Verbundfläche wird von der Verbundlänge und der Verbundbreite aufgespannt. Die Oberfläche des Körpers kann eben oder zumindest bereichsweise gekrümmt sein, wodurch die Verbundfläche zur Anpassung an die Oberfläche des Körpers flexibel respektive krümmbar sein kann.

### TECHNOLOGISCHER HINTERGRUND

Bei der Verbindung zweier Körper, beispielsweise einer Folie mit einer KunststoffVerpackung oder einem Verpackungs-Karton, gewinnt die Verwendung von Haftmitteln wie etwa eine im Kontaktbereich beider Körper aufgetragene Klebstoffschicht zunehmend an Bedeutung. Das Kleben stellt eine Art der Verbindung dar, die immer häufiger und in immer mehr industriellen und alltäglichen Bereichen an- gewendet wird (siehe u. A. US 6,660,922 A). Es werden - beispielsweise gemäß der DE 103 57 322 A1 - sowohl dauerhafte Klebstoffverbindungen angestrebt als auch solche, die nur zeitweise andauern. Wahlweise können auch Klebverbindungen erforderlich sein, die lösbar, vorzugsweise mehrmals anbringbar oder wieder lösbar sein sollen. Die gemäß der US 6,660,922 A und der DE 103 57 322 A1 be-schriebenen Mittel zum Verkleben von Materialien sind jedoch nur beschränkt einsetzbar und kaum wiederverwertbar, insbesondere in Verbindung mit Lebensmitteln können die dort beschriebenen Klebstoffe nicht oder zumindest nicht uneingeschränkt verwendet werden. Die EP 223 727 A2 offenbart ein flächiges Klebemittel mit variierenden Klebstoffbereichen auf einem Trägermaterial. Klebebänder können ferner der WO 2004/080826 A2, der EP 1418212 A1, der US 5,660,922 sowie der WO 97/19867 und der US 2009/162595 Alentnommen werden.

Eine unkomplizierte Wiederablösbarkeit einer Folie oder einer Haftschicht ist regelmäßig bei Lebensmittel-Mehrwegverpackungen erwünscht, damit bei der Reinigung der Verpackung die zur Kennzeichnung der Verpackung verwendete Haftschicht entfernt und nach anschließender Wiederbefüllung der Verpackung diese gemäß der Füllung neu gekennzeichnet werden kann. Dabei können sich die vor der Wiederbefüllung verwendeten Materialien zur Kennzeichnung von denen unterscheiden, die nach der Befüllung verwendet werden. So kann es beispielsweise bei (Karton-)Verpackungen zweckmäßig sein, dass eine aufgeklebte Folie, welche übereinen Träger und ein auf dem Träger angeordnetes Haftmittel verfügt, im Hinblick auf die Verwertung oder Widerverwendung der Verpackung leicht ablösbar ist.

Es kann alternativ gewünscht sein, dass eine Kennzeichnung ganz bewusst nicht ablösbar ist, damit die Kennzeichnung der Verpackung auch bei z.B. unvorsichtiger Handhabung nicht verloren geht. Dies ist insbesondere dann wichtig, wenn die Kennzeichnung der Verpackung auf eine beispielsweise stoffliche Gefährlichkeit des Inhalts der Verpackung hinweist.

Problematisch bei der Herstellung von (selbst-)klebenden Materialien zur Kennzeichnung oder von Prozesswerkstoffen für die Haftung oder das Verkleben von solchen Materialien ist regelmäßig die klebstoffbasierte Verbindung unterschiedlicher Werkstoffe respektive deren Haftung, da die Werkstoffe oftmals unterschiedliche Oberflächeneigenschaften aufweisen. So ist es aufgrund der Oberflächenbeschaffenheit der beteiligten Materialien regelmäßig schwierig, eine Folie oder einen Kunststoff auf einem Steingut haftend respektive klebend anzuordnen. Dies kann darauf zurückgeführt werden, dass ein keramischer oder Steingut umfassender Werkstoff eines organischen Klebers wie etwa Zement oder einiger Silikate bedarf, während eine Oberfläche, die aus einem Kunststoff gebildet ist, eines anorganischen Klebers mit etwa einem Polyurethan (PU) oder einem Epoxidharz bedarf.

### DARSTELLUNG DER ERFINDUNG

Vor diesem Hintergrund liegt der Erfindung die Aufgabe zugrunde, Maßnahmen anzugeben, die zu einem kostengünstig bereit zu stellenden, anhaftbaren, flächenartigen Materialverbund führen, der unter anderem im Bereich der (Lebensmittel-) Verpackungsindustrie einsetzbar ist. Darüber hinaus kann es wünschenswert sein, dass der Materialverbund auf den Oberflächen mehrerer Körper aus vorgegebenen Materialien respektive Werkstoffen derart haftend anordbar ist, dass die für den jeweiligen Einsatzbereich gewünschten Eigenschaften der Haftverbindung wie etwa Haftfestigkeit, Haftdauer, Haftgeschwindigkeit und/oder eine gewünschte Wiederlösbarkeit der Haftverbindung auch im Hinblick auf die Wiederverwertbarkeit oder Recyclefähigkeit der Werkstoffe möglichst uneingeschränkt realisierbar sind.

Diese Aufgabe wird durch einen Materialverbund nach Anspruch 1 gelöst, wobei Weiterbildungen des erfindungsgemäßen Materialverbundes in den abhängigen Patentansprüchen 2 bis 13 angegeben sind. Im Übrigen wird die Aufgabe auch durch ein Verfahren zur Herstellung einer Verpackung nach Anspruch 14 gelöst.

Demnach ist bei dem erfindungsgemäßen Materialverbund insbesondere vorgesehen, dass der Materialverbund aus einem ersten Verbundbereich und wenigstens einem zumindest abschnittsweise an den ersten Verbundbereich angrenzenden zweiten Verbundbereich gebildet ist. Der zweite Verbundbereich weist haftende Eigenschaften auf, so dass der Materialverbund mit der Verbundfläche an einer Oberfläche eines Körpers anhaftbar, insbesondere wiederablösbar anhaftbar, ist. Insbesondere kann die Haftwirkung endgültig oder reversibel sein. Ein endgültig angehafteter Materialverbund lässt sich nur durch Zerstörung des Verbunds und/oder der Oberfläche entfernen. Ein reversibel anhaftender Materialverbund kann - mitunter beliebig häufig - von der Oberfläche abgelöst und wieder an ihr angehaftet werden. Zum unmittelbaren Auftrag des Materialverbunds von einer Auftrageinrichtung auf die Oberfläche des Körpers, an dem der Materialverbund anhaften soll, ist vorgesehen, dass der Materialverbund als solcher trägerlos gebildet ist. So kann der Materialverbund "inline", d. h. während oder unmittelbar nach dessen Herstellung, insbesondere in der Vorrichtung zur Herstellung des Verbunds, bevorzugt zu Haftzwecken weiter- verarbeitet werden. Demnach ist ein Bereitstellen eines Trägers für den Materialverbund als solchen nicht erforderlich, und dessen Entsorgung mithin einsparbar. Der Klebstoff des zweiten und/oder des ersten Verbundbereichs ist aus einem insbesondere reaktivierbaren Heißschmelzklebstoff oder Hotmelt gebildet.

Jeder Verbundbereich hat eine Verbundbereichslänge, eine Verbundbereichsbreite und eine Verbundbereichsdicke. Die Verbundbereichslängen und/oder die Verbundbereichsbreiten und/oder die Verbundbereichsdicken des ersten und des zweiten Verbundbereichs können sich zumindest abschnittsweise voneinander unterscheiden. Insbesondere ist erfindungsgemäß vorgesehen, dass die Verbundbereichs-Maße, d. h. die Verbundbereichslängen, die Verbundbereichsbreiten und die Verbundbereichsdicken, abschnittsweise variieren. Es können demnach Abschnitte vorgesehen sein, in denen beispielsweise die Verbundbereichsdicke des ersten Verbundbereichs kleiner ist als in benachbarten Abschnitten. Dabei können auch Abschnitte vorgesehen sein, in denen die Verbundbereichsdicke eines der beiden Verbundbereiche einen Wert von im Extremfall 0 µm aufweist. Üblicherweise liegen die Verbundbereichsdicken im Bereich von etwa 0,5 µm bis 5 mm. Die Verbundbereichsbreite kann zwischen 3 mm und 10 m betragen. Die Verbundbereichslänge kann zwischen 3 mm und 10 m betragen.

Alternativ können Abschnitte der Verbundbereiche vorgesehen sein, in denen die Verbundbereichsdicke eines Verbundbereichs geringer ist und die des jeweils an- deren Verbundbereichs größer. Dadurch kann erreicht werden, dass die Dicke des Materialverbunds über der gesamten Verbundfläche im Wesentlichen konstant ist, nicht jedoch die Dicken der Verbundbereiche, welche abschnittsweise variieren. So können Abschnitte des Verbundbereichs unterschiedliche Eigenschaften und Funktionen erfüllen. Beispielsweise kann es zweckmäßig sein, dass der Materialverbund einen zweiten Verbundbereich umfasst, der aus einem hochwertigen und kostenintensiven Klebstoff gebildet ist. Damit der Werkstoffaufwand gering gehalten wird, sollte die Verbundbereichsdicke des zweiten Verbundbereichs möglichst gering sein. Zur Verbesserung der Hafteigenschaften sollte dann die Verbundbereichsdicke des ersten Verbundbereichs größer sein als die des zweiten Verbundbereichs. Abschnittsweise kann der zweite, hochwertige Verbundbereich eine Materialschwächung aufweisen. Im Bereich der Materialschwächung kann die Verbundbereichsdicke oder -stärke des ersten Verbundbereichs derart vergrößert sein, dass der Verbundbereich insgesamt eine im Wesentlichen konstante Materialverbunddicke aufweist.

Der Materialverbund kann auf einem Substrat angeordnet sein. Der Materialverbund kann das Substrat bei Bedarf umfassen, wobei auch hier eine Anordnung des Materialverbunds auf dem Substrat "inline", d. h. in einem Arbeitsgang zusammen mit der Herstellung des Materialverbunds erfolgen kann. Das Substrat kann beispielsweise eine aufwickelbare Kunststoff- oder Metallfolie oder eine flache, insbesondere abstapelbare, Folienbahn sein. Der Materialverbund kann in diesem Fall von dem Substrat beispielsweise durch Abrollen oder einen vergleichbaren Ablagevorgang von dem Substrat, wie z. B. einer "Releasefolie" auf die Oberfläche des zu beklebenden Körpers übertragen werden. Das Substrat vereinfacht eine "Offline"-Verwertung des Materialverbunds, d. h. eine Verwertung außerhalb der Vorrichtung zur Herstellung des Materialverbunds, insbesondere nach dessen Herstellung und/oder nach dessen Lagerung.

Es kann ferner ein weiterer Verbundbereich vorgesehen sein, auf dem der erste und/oder der zweite Verbundbereich derart angeordnet sind, dass der weitere Verbundbereich einen Träger oder ein Substrat für den ersten und/oder den zweiten Verbundbereich bildet. Das Substrat kann einen Kunststoff umfassen oder Cellulose. Es kann wahlweise aus einem organischen oder einem anorganischen Material gebildet sein. Beispielsweise kann das Substrat aus Silikonpapier, aus Kunststoff, einer Kunststofffolie, oder aus einem beliebigen Releaseliner gebildet sein, wobei unter Releaseliner eine flächenartige Schutzschicht verstanden werden kann, etwa eine "Trennfolie" oder ein "Trennpapier".

Ein weiterer Vorteil der Erfindung liegt darin, dass durch die Auswahl der Materialien der Verbundbereiche und durch Anpassung und/oder räumliche Variation der Verbundbereichsdicken ein Unterschied der thermischen Ausdehnungskoeffizienten des zu beklebenden Körpers und des Materialverbunds oder dessen Träger respektive Substrat zumindest zum Teil kompensiert werden kann. In diesem Fall kann der Körper heiß oder kalt gelagert werden, ohne dass sich der anhaftende Materialverbund vollständig oder teilweise aufgrund thermischer Spannungen zwischen den beteiligten, aneinander kontaktierten Komponenten von dem Körper ablöst.

Wenn der erste und der zweite Verbundbereich einen Klebstoff umfassen, kann auch an einer möglicherweise herstellungsbedingte Fehlstelle des zweiter Verbundbereichs durch die klebende Wirkung des ersten Verbundbereichs eine haftende Verbindung des Materialverbunds erreicht werden. Die Haftwirkung des Materialverbunds wird dadurch verbessert. Außerdem bewirkt eine klebende Eigenschaft des ersten Verbundbereichs, dass der zweite Verbundbereich nicht nur auf der Oberfläche des zu beklebenden Körpers haftet, sondern auch auf dem ersten Verbundbereich. Der Schmelzklebstoff kann dabei Basispolymere, wie Polyamide (PA), Polyethylen (PE), amorphe Polyalpholefine (APAO), Ethylenvinylacetat- Copolymere (EVAC), Polyester-Elastomere (TPE-E), Polyurethan-Elastomere (TPE-U), Copolyamid-Elastomere (TPE-A) Vinylpyrrolidon/Vinyacetat-Copolymere und andere umfassen. Im Übrigen kann der Schmelzklebstoff Harze, wie Kolophonium, Terpene und/oder Kohlenwasserstoffharze enthalten und ebenso Stabilisatoren wie Antioxidantien, Metalldesaktivatoren und/oder Lichtschutzmittel, sowie gegebenenfalls Wachse, wie natürliche Wachse (Bienenwachs) und/oder synthetische Wachse (voll-, teilsynthetisch, chemisch verändert).

Sofern der Materialverbund für einen Verwendungszweck im Lebensmittelbereich vorgesehen ist, kann vorgesehen sein, dass der erste und/oder der zweite Verbundbereich einen Klebstoff umfasst, der für einen Lebensmittelkontakt geeignet ist. Der Klebstoff kann dabei folienartig gebildet sein. Beispielsweise kann eine Konfiguration des Materialverbunds zweckmäßig sein, bei der der erste Verbundbereich aus einem Heißschmelzklebstoff gebildet ist, der zweite Verbundbereich aus einem folienartigen Klebstoff, der für einen Lebensmittelkontakt geeignet ist, und das Substrat aus einer Kunststofffolie, beispielsweise aus amorphem Polyethylenterephthalat (APET). Dabei kann die Verbundbereichshöhe oder die Dicke des ersten und des zweiten Verbundbereichs zwischen etwa 5 µm und etwa 50 µm betragen, vorzugsweise kann die Dicke des ersten Verbundbereichs zwischen etwa 10 µm und etwa 20 µm liegen. Die Verbundbereichshöhe oder die Dicke des zweiten Verbundbereichs kann etwa 10 µm betragen. Die Dicke des Substrats kann zwischen etwa 5 µm und etwa 10 µm betragen, vorzugsweise zwischen etwa 15 µm und etwa 25 µm.

Es kann zweckmäßig sein, wenn ein Verbundbereich oder beide Verbundbereiche einen Haftschmelzklebstoff oder Hotmelt umfassen. Der Haftschmelzklebstoff kann auf Polyurethan-Basis (PU-Basis) oder auf Acryl-Basis gebildet sein, oder auf Basis
eines reatktiven Polyurethan (Polyurethane Reactive, PUR) oder eines reaktiven Polyolefins (Polyolefin Reactive, POR). Wahlweise kann einer der anderen Verbundbereiche einen strahlhärtenden oder strahl-vernetzenden Klebstoff umfassen, wie einen UV-vernetzenden Klebstoff (Ultraviolettstrahlung, UV). Durch Variation der Zusammensetzung beider Verbundbereiche kann erreicht werden, dass ein Verbundbereich respektive eine Seite des Materialverbunds schneller abbindet als der anderen Verbundbereich respektive die andere Seite des Materialverbunds. Es kann ferner erreicht werde, dass ein Verbundbereich (eine Seite des Verbunds) reaktivierbar ist - beispielsweise durch ein Lösungsmittel (auf Wasserbasis) -, wohingegen der andere Verbundbereich im Wesentlichen nicht reaktivierbar (insbesondere wasserfest) ist. Die Verbundbereiche können auch so beschaffen sein, dass sie jeweils unterschiedliche Schmelztemperaturen haben. Der verwendete Klebstoff des ersten Verbundbereichs und/oder weiterer Verbundbereiche kann feuchtigkeitsvernetzende oder strahl-vernetzende Eigenschaften haben. Er kann im Übrigen chemisch vernetzbar sein. Es können Klebstoffe verwendet werden, die dauerhaft klebrig oder erst nach Reaktivierung klebrig sind.

Bei einer vorteilhaften Gestaltung des erfindungsgemäßen Materialverbunds kann vorgesehen sein, dass der erste Verbundbereich eine sich im Wesentlichen parallel zur dritten Richtung erstreckende Verbundbereichsdicke aufweist, mit der die ober- flächenhaftende Wirkung des zweiten Verbundbereichs funktionell unterstützt wird oder funktionell unterstützbar ist. In diesem Fall umfasst der Materialverbund einen als Funktionsbereich gebildeten (zweiten) Verbundbereich und einen als Wirkungsbereich gebildeten (ersten) Verbundbereich. Von dem Funktionsbereich respektive von der chemischen Zusammensetzung des Funktionsbereichs kann beispielsweise die Haftwirkung des Materialverbunds ausgehen, da der als Funktionsbereich gebildete (zweite) Verbundbereich einen Klebstoff umfasst. Eine die klebende Wirkung des Funktionsbereiches unterstützende Wirkung kann von dem als Wirkungsbereich gebildeten (ersten) Verbundbereich ausgehen. Die Dicke der Funktionsund/oder Wirkungsbereiche kann dabei im Bereich zwischen 0,5 µm und 10 mm liegen.

Weist der erste Verbundbereich beispielsweise ebenso wie der zweite Verbundbereich klebende Eigenschaften auf, so kann der ebenfalls haftende erste Verbundbereich die Haftwirkung des zweiten Verbundbereichs weiter unterstützen. Dies ist insbesondere dann der Fall, wenn der zweite Verbundbereich aus einem hochwertigen, und daher dünn aufgetragenen Klebstoff gebildet ist. Dieser dünne Klebstoffbereich des Materialverbunds gelangt insbesondere auf rauen oder strukturierten Oberflächen, wie sie auf Steingut, Holz, einigen Kartons und Gläsern anzutreffen sind, nicht in die Strukturen der Oberfläche ein, wodurch die Haftwirkung geschwächt wird. Durch die Unterstützung des ersten, ebenfalls haftenden Verbundbereichs wird die Haftwirkung verbessert. Der erste Verbundbereich erfüllt dabei eine Füllwirkung, mit der Bereiche der strukturierten oder rauen Oberfläche derart ausgefüllt werden, dass auch der zweite, hochwertig klebende Verbundbereich in die Oberflächenunebenheiten eindringt und dort eine klebende Wirkung erzielt wird. Durch die Füllwirkung des ersten Verbundbereichs wird auch an unebenen Stellen der Oberfläche ein Formschluss oder eine nahezu formschlüssige Kontaktierung zwischen Oberfläche und zweitem Verbundbereich erzielt.

Der erste oder der zweite Verbundbereich kann eine Barrierewirkung für den jeweils anderen Verbundbereich haben, insbesondere kann einer der Verbundbereiche oder zumindest Abschnitte dieses Verbundbereichs eine Barriereschicht bilden. Die Barrierewirkung kann beispielsweise darin bestehen, dass ein Verbundbereich, der einen wasserlöslichen Klebstoff umfasst, durch die Barrierewirkung des jeweils anderen Verbundbereichs von der klebstofflösend wirkenden Luftfeuchtigkeit der Umgebungsluft abgeschirmt wird.

Es kann zweckmäßig sein, wenn die Haftungseigenschaften des Materialverbunds auf der Oberfläche des Körpers dadurch beeinflussbar sind, dass der erste und/oder der zweite Verbundbereich aus einem Werkstoff gebildet sind, dessen Zusammensetzung auf den Werkstoff abgestimmt ist, aus dem die Oberfläche des Körpers gebildet ist. Dabei umfassen die Haftungseigenschaften insbesondere die Haftungsstärke, die Haftungsgeschwindigkeit, den Haftungsbildungsdruck, die Haftungsdauer, den Haftungsaufwand und/oder die Wiederablösbarkeit des Materialverbunds. Die Haftungseigenschaften können durch unterschiedliche Formulierungen der Bestandteile der Verbundbereiche, insbesondere der in den Verbundbereichen enthaltenen (Heißschmelz-)Klebstoffen, manipuliert werden.

Im Hinblick auf eine kostengünstige und zugleich für eine hinsichtlich der erforderlichen Verbundbereichsabmessungen effiziente Herstellung ist der erste und der zumindest zweite Verbundbereich flächig extrudierbar oder extrudiert. Bevorzugt sind der erste und der zweite Verbundbereich koextrudierbar oder koextrudiert. Die flächige Extrusion kann beispielsweise mit einer Breitschlitz-Extrusionsdüse erreicht werden, in die die geschmolzenen Materialien eingebracht werden, aus denen die Verbundbereiche des Materialverbunds gebildet sind. Wahlweise kann eine Mehrfach-Extrusionsdüse oder eine Koextrusionsdüse verwendet werden, in der die Bestandteile beider respektive aller Verbundbereiche gemeinsam geschmolzen und zusammen extrudiert, d. h. koextrudiert werden. Bei der Koextrusion kann beispielsweise ein zähflüssiger Materialstrom mit mehreren unterschiedlichen Materialkomponenten, insbesondere mit zwei unterschiedlichen Heißschmelzklebstoffen, auf eine wahlweise kühlbare Transporteinrichtung oder auf ein Substrat geführt werden, auf dem die Extrudate zumindest teil- oder bereichsweise aushärten, oder - sofern Klebstoffe enthalten sind - haften und gegebenenfalls inaktiviert werden. Die (Ko-)Extrudate können sehr dünn und damit material- und kostensparend hergestellt werden.

Es kann vorgesehen sein, dass zumindest der erste Verbundbereich als Schicht des Materialverbunds gebildet ist, die eine flächenhafte Ausdehnung aufweist, welche im Wesentlichen parallel zu flächenhaften Ausdehnung des Materialverbunds orientiert ist, und welche vorzugsweise im Wesentlichen flächengleich mit der flächigen Ausdehnung des Materialverbunds ist. Wahlweise kann auch der zweite Verbundbereich auf dem ersten Verbundbereich zumindest abschnittsweise aufgeschichtet sein, wodurch der Materialverbund zumindest abschnittsweise mehrschichtig ist. Die Verbundbereichsdicke des ersten und/oder des zweiten Verbundbereichs können zumindest abschnittsweise entlang der ersten Richtung und/oder entlang der zweiten Richtung variieren.

Die Schicht des ersten Verbundbereichs und die Schicht des zweiten Verbundbereichs können dabei zumindest abschnittweise jeweils eine erste und eine zweite Schichtdicke aufweisen. Die Summe der Schichtdicken der Schichten kann etwa höchstens der Verbunddicke entsprechen, wobei die Verbunddicke auf die maximale Verbunddicke des gesamten Materialverbundes bezogen wird.

Bevorzugt kann der Materialverbund mehrere, insbesondere flächenhafte oder streifenartige Abschnitte aufweisen, in denen der erste und der zweite Verbundbereich entlang einer Grenzfläche aneinander angrenzen. Dabei kann vorgesehen sein, dass die Abschnitte ein im Wesentlichen regelmäßiges Muster bilden, bei dem ein erster Abschnitt oder eine erste Gruppe von Abschnitten zu mindestens einem zweiten Abschnitt oder zu mindestens einer zweiten Gruppe von Abschnitten entlang der ersten Richtung und/oder entlang der zweiten Richtung einen im Wesentlichen konstanten Abstand aufweisen. Demnach können beispielsweise der zweite Verbundbereich des Materialverbunds respektive die zweite Schicht des mehrschichtigen Materialverbunds eine oder mehrere Unterbrechungen umfassen, die parallel zur ersten und/oder parallel zur zweiten Richtung verlaufen. Die Unterbrechungen können den Materialbedarf und damit die Fertigungskosten reduzieren. Durch diese Unterbrechungen des zweiten Verbundbereichs (oder der zweiten Schicht) entsteht ein Materialverbund, bei dem der zweite Verbundbereich gemäß eines durch die Unterbrechungen gekennzeichneten Musters auf dem ersten Verbundbereich (oder der ersten Schicht) angeordnet ist. Die Unterbrechungen können äquidistant angeordnet sein, wahlweise können die Unterbrechungen selbst gemäß einem Muster gebildet sein. Der gesamte Materialverbund wird dadurch in regelmäßiger Weise in Abschnitte unterteilt, wo der Verbund ein- oder mehrschichtig aufgebaut ist.

Umfasst der zweite, regelmäßig mit räumlichen Unterbrechungen versehene Verbundbereich einen Klebstoff, hat das Verbundmaterial nur dort klebende Eigenschaften, wo keine Unterbrechung anzutreffen ist respektive dort, wo der Verbund einen mehrschichtig gebildeten Abschnitt aufweist. Es kann dabei zweckmäßig sein, wenn die Unterbrechung oder die Unterbrechungen bevorzugt in eine Richtung so angeordnet sind, dass die mehrschichtigen, zu den Unterbrechungen benachbart angeordneten Abschnitte bahnförmige Abschnitte des Materialverbunds bilden. Da der zweite Verbundbereich erfindungsgemäß einen Klebstoff umfasst, bilden die durch die Unterbrechungen begrenzten Abschnitte und/oder die bahnförmigen Bereiche des Materialverbunds diejenigen Bereiche, die an der Haftung des Verbunds bevorzugt beteiligt sind. Der erste Verbundbereich kann dabei eine die Haftung unterstützende Funktion aufweisen, wodurch die Haftungseigenschaften auch auf beispielsweise rauen Oberflächen verbessert werden.

Neben dem abschnittsweise mehrschichtig gebildeten Materialverbund sind erfindungsgemäß zahlreiche Alternativen vorgesehen, mit denen ebenfalls die für den jeweiligen Einsatzbereich gewünschten Eigenschaften der Haftverbindung wie etwa Haftfestigkeit, Haftdauer, Haftgeschwindigkeit und/oder eine gewünschte Wiederlösbarkeit der Haftverbindung anwendungsgemäß verbessert werden. So kann die Grenzfläche, entlang derer die Verbundbereiche innerhalb eines oder mehrerer Abschnitte des Materialverbunds aneinander angrenzen, zumindest bereichsweise im Wesentlichen parallel zu der Verbundfläche verlaufen. In diesem Fall liegen die flächigen Verbundbereiche bei horizontaler Betrachtung bevorzugt aufeinander, der Materialverbund ist zumindest abschnittsweise schichtartig respektive mehrschichtig aufgebaut.

Wahlweise kann die Grenzfläche, entlang derer die Verbundbereiche innerhalb eines oder mehrerer Abschnitte des Materialverbunds aneinander angrenzen, zumindest bereichsweise im Wesentlichen senkrecht zu der Verbundfläche verlaufen. In diesem Fall liegen die Verbundbereiche bei horizontaler Betrachtung, d. h. bei Betrachtung des horizontal verlaufenden Materialverbunds, abschnittsweise nebeneinander. Erst bei Betrachtung eines vertikal verlaufenden Materialverbunds entsteht der Eindruck, der Verbund sei mehrschichtig mit Schichten, die abwechselnd aus dem ersten und dem zweiten Verbundbereich gebildet sind.

Vorzugsweise kann vorgesehen sein, dass die Grenzfläche, entlang derer die Verbundbereiche innerhalb eines oder mehrerer Abschnitte des Materialverbunds aneinander angrenzen, zumindest einen abgewinkelten Bereich umfasst. Insbesondere kann der Verlauf der Grenzfläche einen U-förmigen Querschnitt haben. In diesem Fall liegt bei horizontaler Betrachtung des Querschnitts des Materialverbunds ein Bereich des zweiten Verbundbereichs in einem Bereich des ersten Verbundbereichs. Der zweite Verbundbereich ist demnach in jedem Abschnitt des Materialverbunds zumindest bereichsweise in den ersten Verbundbereich eingebettet. Die Verbundfläche kann dabei im Wesentlichen eben verlaufen. Alternativ kann die Verbundfläche im Bereich der Abschnitte Abwinklungen aufweisen, wodurch der zweite oder der erste Verbundbereich abschnittsweise aus der Verbundfläche herausragt oder in die Verbundfläche hineinragt. In diesem Fall ist die effektive unmittelbare Kontaktfläche zwischen dem Verbund und der Oberfläche des Körpers, an dem der Verbund anhaften soll, kleiner als die (abschnittsweise mit Abwinklungen versehene) Verbundfläche. Dies kann bei wiederablösbaren Materialverbünden zweckmäßig sein.

Es kann ferner vorgesehen sein, dass die Grenzfläche, entlang derer die Verbundbereiche innerhalb eines oder mehrerer Abschnitte des Materialverbunds aneinander angrenzen, zumindest bereichsweise gekrümmt ist. Die Krümmung der Grenzfläche kann im Wesentlichen konvex oder konkav verlaufen.

Eine weitere Ausgestaltung des erfindungsgemäßen Materialverbunds sieht einen Außen-Verbundbereich vor, der so angeordnet ist, dass der erste und der zweite Verbundbereich zwischen dem Außen-Verbundbereich und dem Substrat angeordnet sind. Der Außen-Verbundbereich kann zumindest abschnittsweise haftend auf dem zweiten Verbundbereich angeordnet sein. Die Anordnung kann mechanisch erfolgen, beispielsweise über eine Walze oder eine Druckvorrichtung. Insbesondere kann die Anordnung "inline" erfolgen, d. h. während der Herstellung des Materialverbunds respektive in der Vorrichtung zur Herstellung des Materialverbunds. Der Außenverbundbereich kann aus einem Faserwerkstoff gebildet sein, wodurch der Materialverbund beispielsweise zur Verwendung als Wand- oder Decken-Tapete geeignet ist.

Im Hinblick auf die Verbesserung der Wiederverwertbarkeit von Körpern, an denen der erfindungsgemäße Materialverbund bestimmungsgemäß anhaften soll, betrifft die vorliegende Offenbarung einen Materialverbund, welcher einer insbesondere dauerhaft haftenden Verbindung zumindest eines ersten Werkstoffs an zumindest einem zweiten Werkstoff dient. Dies umfasst beispielsweise die Verbindung zweier Körper aus jeweils unterschiedlichen Werkstoffen. Der erste Verbundbereich des Materialverbunds haftet an dem ersten Werkstoff und der zweite Verbundbereich an dem zweiten Werkstoff. Erfindungsgemäß sind die Verbundbereiche des Materialverbunds nach dem Erzeugen der Verbindung beider Werkstoff derart trennbar, dass die Werkstoffe, an denen die Verbundbereiche anhaften, nach der Trennung der Verbundbereiche eine für eine Wiederverwertung der Werkstoffe ausreichende Sortenreinheit aufweisen.

Nach dem Trennen der Verbundbereiche verbleiben der erste Verbundbereich auf dem ersten Werkstoff und der zweite Verbundbereich auf dem zweiten Werkstoff.

Dabei sind die Materialien, aus denen der erste und der zweite Verbundbereich gebildet sind, auf die Werkstoffe abgestimmt. Es ist demnach möglich, die Werkstoffe aufgrund der Abstimmung mit den Materialien, aus denen die Verbundbereiche gebildet sind, mit hoher Sortenreinheit einer Widerverwertung zuzuführen. Eine aufwändige Trennung der Werkstoffe von den Bestandteilen des Materialverbunds entfällt. Die erreichbare Sortenreinheit liegt bei etwa 99% oder oberhalb davon.

Vorteilhaft ist es, wenn der Materialverbund einen aktivierbaren Wirkstoff umfasst, bei dessen Aktivieren das Trennen der Verbundbereiche bewirkt wird. Der Wirkstoff kann im Bereich der Grenzfläche der Verbundbereiche des Materialverbunds angeordnet sein. Bevorzugt kann eine den Wirkstoff umfassende Grenzschicht vorgesehen sein, die in dem Bereich zwischen dem ersten Verbundbereich und dem zweiten Verbundbereich angeordnet ist.

Durch Verändern der Energiebilanz des Wirkstoffs kann der Wirkstoff aktivierbar sein. So kann die Aktivierung beispielsweise durch einen Energieeintrag in den Wirkstoff, insbesondere durch elektrische Energie, thermische Energie, Strahlungsenergie, Schallenergie oder Kombinationen daraus erfolgen. Insbesondere können zur Aktivierung eine Infrarotstrahlung (IR-Strahlung), elektrischer Strom, elektrische Spannung, Ultraschall, Unterkühlung oder Erhitzung vorgesehen sein. Einzelne dieser Maßnahmen oder Kombinationen daraus können dazu führen, dass der Wirkstoff eine mechanische Wirkung auf die Verbundbereiche überträgt, wodurch diese trennbar werden. Die mechanische Wirkung kann mechanische Spannungen oder Dehnungen umfassen. Es kann aber auch durch das Aktivieren des Wirkstoffs eine chemische Reaktion in Gang gesetzt werden, durch sich die Verbundbereiche voneinander trennen.

Dadurch, dass der erfindungsgemäße Materialverbund in all seinen vorbeschriebenen Ausgestaltungen auf einer Oberfläche eines Körpers aus einem vorgegebenen Material respektive Werkstoff haftend so anordbar ist, dass die für den jeweiligen Einsatzbereich gewünschten Eigenschaften der Haftverbindung wie etwa Haftfestigkeit, Haftdauer, Haftgeschwindigkeit und/oder eine gewünschte Wiederlösbarkeit der Haftverbindung uneingeschränkt zur Verfügung stehen, eignet sich der Materialverbund alternativ zur Verwendung zur Kennzeichnung oder als Kennzeichnungshilfe. Die Erfindung umfasst daher auch den Aspekt, dass der Materialverbund eine Kennzeichnung oder Kennzeichnungshilfe bildet, welche zum Kennzeichnen oder Identifizieren des Körpers dient, auf dessen Oberfläche der Materialverbund anhaftbar ist. Bei dem Körper kann es sich beispielsweise um eine Verpackung handeln, die aus Papier, Karton, Metall, Kunststoff, Glas oder beliebigen anderen Materialien oder Kombinationen dieser oder anderer Materialien gebildet ist. Bei dem Körper kann es sich aber auch um ein Produkt oder ein Gehäuse eines Produktes handeln, auf welchem eine Kennzeichnung oder Beschriftung klebend anzuordnen ist.

Durch die haftenden Eigenschaften des zweiten Verbundbereichs und dadurch, dass bevorzugt der erste Verbundbereich respektive der Materialverbund bedruckbar und/oder beschriftbar ist, kann der Körper, auf dessen Oberfläche der Materialverbund haftend angeordnet ist, gekennzeichnet werden. Je nach Beschaffenheit des zweiten (haftenden) und/oder ersten (stark haftenden oder schwach haftenden) Verbundbereichs oder je nach Formulierung der Bestandteile des zweiten und/oder ersten Verbundbereichs kann die Kennzeichnung oder das zur Kennzeichnung verwendete Material stark und dauerhaft anhaften oder wiederablösbar sein. Das zur Kennzeichnung verwendet Material kann wahlweise durchsichtig, opak respektive durchscheinend oder undurchsichtig sein. Wahlweise kann der Materialverbund auf der Verbundfläche oder der Fläche, die der Verbundfläche gegenüberliegt, bedruckt oder beschriftet sein. Der Druck oder die Beschriftung kann sich auf einen Verbundbereich oder auf mehrere Verbundbereiche erstrecken. Die Beschriftung oder Bedruckung kann wahlweise auch auf einem Substrat oder Träger angeordnet sein, die der Materialverbund umfasst.

Es kann auch vorgesehen sein, dass auf dem Materialverbund ein insbesondere zur Kennzeichnung oder Identifizierung dienendes Material aufbringbar ist, wodurch der Materialverbund als Haftmittel für das auf der Oberfläche des Körpers anhaftbare Material dient. Das Material respektive die Kennzeichnung kann beispielsweise aus einer Kunststoff- oder Metallfolie gebildet sein, oder aus einem Papier oder einem cellulosehaltigen Werkstoff. Die Ausgestaltungen des Materialverbunds, d. h. die Zusammensetzungen, Beschaffenheiten und Anordnungen der Verbundbereiche des Materialverbunds relativ zueinander und innerhalb des Verbunds, sind dabei an die Eigenschaften und Beschaffenheiten der Oberfläche der Kennzeichnung und zu beklebender Oberfläche des Körpers respektive der Verpackung anpassbar.

Vorteilhaft im Hinblick auf die Beklebung, Lagerung, den Transport oder die Weiterverarbeitung des erfindungsgemäßen Materialverbunds ist es, wenn der Materialverbund auf einem Zylinder oder auf einer Rolle aufwickelbar oder von einem Zylinder oder einer Rolle abwickelbar ist. Durch Drehung des Zylinders oder der Rolle können Bereiche oder Abschnitte des Materialverbunds leicht abgelöst werden und auf den zu beklebenden Körper aufgebracht werden.

Der eingangs beschriebene Materialverbund ist gemäß weiteren Aspekten der Erfindung für Anwendungen in der Verpackungsindustrie von zusätzlicher Relevanz. Im Stand der Verpackungstechnik ist es üblich, für die Abdeckfolie einer Kunststoffschalen-Verpackung auf einer PET-Außenschicht von etwa 15 µm bis etwa 25 µm Dicke mittels einer drucksensitiven Klebstoffschicht (Pressure Sensitive Adhessive, PSA) von etwa 20 µm eine Polyethylen-Schicht (PE-Schicht) von etwa 15 µm Dicke zu kaschieren. Handelt es sich bei der Verpackung beispielsweise um eine Kunststoffschale mit einer Abdeckfolie, so besteht das zumeist tiefziehbare Schalenmaterial, welches entsprechend dicker in der Materialstärke gehalten sein muss, gemäß dem Stand der Technik außenseitig aus einer etwa 300 µm bis etwa 400 µm PET-Schicht, und innenseitig aus einer 15-µm-PE-Schicht. Die Abdeckfolie umfasst ebenfalls eine PE-Schicht, welche mit der PE-Schicht des Schalenmaterials heißsiegelfähig ist. Zwischen der PET-Schicht und der PE-Schicht befindet sich gemäß dem Stand der Technik ein Haftkleber (beispielsweise PSA, etwa 20 µm dick). Das Lebensmittel gerät nur mit der PE-Schicht in Kontakt. Derartige Verpackungen konnten sich insbesondere wegen der Heißsiegelfähigkeit der PE-Schicht etablieren, welche einen luftdichten Verschluss realisierbar werden ließ. Gemäß dem Stand der Technik bedarf es daher aufwändiger Verfahren zur Schaffung einer durch Heißsiegeln luftdicht verschließbaren Verpackung.

Die vorliegende Offenbarung betrifft ferner eine Verwendung des eingangs beschriebenen Materialverbunds als Verpackung oder als Verpackungsbestandteil. Besonders bevorzugt ist eine Verwendung des erfindungsgemäßen Materialverbunds als Lebensmittelverpackung oder als Lebensmittelverpackungsbestandteil.

Die Verwendung des erfindungsgemäßen Materialverbunds für Verpackungszwecke, insbesondere für Lebensmittelverpackungen erspart erhebliche Materialmengen und Arbeitsgänge. Durch den Einsatz eines für Lebensmittelkontakt zugelassenen Klebstoffs, der in sehr dünnerer Schichtstärke auftragbar ist, wird es möglich, Verpackungen luftdicht zu verschließen, die gänzlich ohne PE auskommen. Dies ist insbesondere insofern ein Vorteil, als sich die bisher verwendeten Klebstoffe, die für Lebensmittelkontakt zugelassen sind, mit einer PE- Außenschicht nicht flächig verkleben lassen.

Gemäß der vorliegenden Offenbarung wird außerdem vorgeschlagen, die für einen Lebensmittelkontakt zugelassene Klebstoffschicht rückseitig mit einem PSA-Klebstoff zu verbinden, so dass die Klebstoffschicht über die PSA-Schicht mit der PET-Schicht fest haftend verbindbar ist. Der Auftrag erfolgt durch Koextrusion. Es werden zwei verschiedene Klebstoffarten miteinander verbunden, indem sie bevorzugt mit einem aus schmelzflüssigen Extrudaten gebildeten Gießvorhang oder einem so genannten "Falling Curtain" beispielsweise in den Nip zwischen zwei Walzen eingebracht werden. Eine der Walzen ist dabei mit der PET-Folie teilumschlungen. Hierdurch wird die bodenseitige Verpackungsschicht ausschließlich aus etwa 300 µm bis etwa 400 µm PET verwendbar. Nach dem Tiefziehen ist das PET der Bodenschicht mit dem neuartigen Klebstoff auf der Deckfolieninnenseite durch insbesondere thermischen Energieeintrag verbindbar, der vergleichbar mit einem Heißsiegel-Vorgang ist. Dies deshalb, weil die Heißsiegeltemperaturen deutlich oberhalb der Herstellungstemperaturen für den Materialverbund im Extrusionsverfahren sind. So kann Extrusionstemperatur beispielsweise zwischen etwa 120 °C und etwa 150 °C liegen, während die Siegeltemperatur eher oberhalb von etwa 200 °C liegt.

Bei der hierin offenbarten Verpackung ist ein erster Verpackungsbestandteil vorgesehen und zumindest ein zweiter Verpackungsbestandteil. Die Verpackungsbestandteile begrenzen zumindest abschnittsweise einen oder mehrere vorzugsweise luftdicht abgeschlossene Hohlräume zur Aufnahme des zu verpackenden Verpackungsguts. Gemäß der vorliegenden Offenbarung ist der erste Verpackungsbestandteil und/oder der zweite Verpackungsbestandteil aus einem eingangs beschriebenen Materialverbund gebildet. Der erste und der zweite Verpackungsbestandteil stehen zumindest abschnittsweise unter Bildung zumindest einer Kontaktfläche sowie eines oder mehrerer vorzugsweise luftdicht abgeschlossener Hohlräume zur Aufnahme des zu verpackenden Verpackungsguts miteinander in Kontakt. Zwischen dem ersten Verpackungsbestandteil und dem zweiten Verpackungsbestandteil sind durch insbesondere thermischen Energieeintrag im Bereich der Kontaktfläche die Verpackungsbestandteile miteinander verbindbar oder verbunden.

Wahlweise kann der Materialverbund ein Substrat aus einer Kunststofffolie umfassen, insbesondere aus einer Polyethylenterephthalat-Folie (PET-Folie). Bei dem PET kann es sich um amorphes PET (APET) handeln. Der erste Verbundbereich des Materialverbunds kann einen Heißschmelzklebstoff umfassen. Der zweite Verbundbereich des Materialverbunds kann einen Klebstoff umfassen, der für einen Lebensmittelkontakt geeignet ist, und der vorzugsweise folienartig gebildet ist.

Bevorzugt ist der zweite Verpackungsbestandteil, beispielsweise die Schale oder das schalenartige Unterteil einer mehrteilig gebildeten Kunststoffverpackung, aus einer Kunststofffolie, insbesondere aus einer Polyethylenterephthalat-Folie (PET-Folie) gebildet. Der zweite Verpackungsbestandteil kann auch eine Kunststofffolie, insbesondere eine Polyethylenterephthalat-Folie (PET-Folie), umfassen.

Bei dem erfindungsgemäßen Verfahren zur Herstellung einer Verpackung mit einem ersten Verpackungsbestandteil und zumindest einem zweiten Verpackungsbestandteil, bei dem die Verpackungsbestandteile zumindest abschnittsweise einen oder mehrere vorzugsweise luftdicht abgeschlossene Hohlräume zur Aufnahme des zu verpackenden Verpackungsguts begrenzen, ist vorgesehen, dass der erste und/oder der zweite Verpackungsbestandteil aus einem eingangs beschriebnen, erfindungsgemäßen Materialverbund gebildet ist. Der erste und der zweite Verpackungsbestandteil werden zumindest abschnittsweise unter Bildung zumindest einer Kontaktfläche sowie eines oder mehrerer vorzugsweise luftdicht abgeschlossener Hohlräume zur Aufnahme des zu verpackenden Verpackungsguts miteinander in Kontakt gebracht. Der erste Verpackungsbestandteil und der zweite Verpackungsbestandteil werden durch insbesondere thermischen Energieeintrag im Bereich der Kontaktfläche miteinander vorzugsweise luftdicht verbunden. Beispielsweise durch Zuführung einer thermischen Energie, die dem Eintrag beim Heißsiegeln ähnlich ist, schmilzt der Klebstoff des Materialverbunds des einen Verpackungsbestandteils und verbindet sich mit dem anderen Verpackungsbestandteil oder mit Komponenten des anderen Verpackungsbestandteils.

Es kann vorgesehen sein, dass der aus dem Materialverbund gebildete erste und/oder zweite Verpackungsbestandteil durch Koextrusion der Verbundbereiche auf ein Substrat gebildet wird. Wahlweise kann der erste Verbundbereich aus einem Klebstoff gebildet werden, der der für einen Lebensmittelkontakt geeignet ist, und der vorzugsweise folienartig gebildet ist. Der zweite Verpackungsbestandteil kann durch Tiefziehen aus einer Kunststofffolie, insbesondere aus einer Polyethylenterephthalat- Folie (PET-Folie) gebildet werden.

Die vorgenannten sowie die beanspruchten und in den Ausführungsbeispielen beschriebenen, erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel eines Materialverbunds sowie einer Verpackung dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigen
- Fig. 1: einen Ausschnitt aus einem zweischichtigen Materialverbund in schematischer Seitenansicht;
- Fig. 2: eine Ausschnitt aus einem im Wesentlichen zweischichtigen Materialverbund in perspektivischer, schematischer Ansicht;
- Fig. 3: einen Materialverbund mit abschnittsweise unterschiedlich dicken Verbundbereichen in schematischer Schnittansicht;
- Fig. 4: einen alternativen Materialverbund mit abschnittsweise unterschiedlich dicken Verbundbereichen in schematischer Schnittdarstellung;
- Fig. 5: einen abschnittsweise zweischichtigen Materialverbund in seitlicher Schnittansicht (schematisch);
- Fig. 6: einen Materialverbund mit regelmäßig angeordneten Gruppen von Verbundbereichs-Abschnitten im seitlichen Schnitt (schematisch);
- Fig. 7: einen Materialverbund im seitlichen Schnitt, bei dem die Verbundbereiche abwechselnd nebeneinander angeordnet sind (schematisch);
- Fig. 8: einen Materialverbund im seitlichen Schnitt (schematisch), bei dem der zweite Verbundbereich abschnittsweise so in dem ersten Verbundbereich angeordnet ist, dass die Verbundfläche einen ebenen Verlauf hat;
- Fig. 9: einen Materialverbund im seitlichen Schnitt (schematisch), bei dem der zweite Verbundbereich abschnittsweise in dem ersten Verbundbereich so angeordnet ist, dass die Verbundfläche abgewinkelte, nach außen hervortretende Bereiche aufweist;
- Fig. 10: einen Materialverbund im seitlichen Schnitt (schematisch), bei dem der zweite Verbundbereich abschnittsweise in dem ersten Verbundbereich so angeordnet ist, dass die Verbundfläche abgewinkelte, nach innen hineinragende Bereiche aufweist;
- Fig. 11: einen Materialverbund im seitlichen Schnitt (schematisch), bei dem der zweite Verbundbereich abschnittsweise in dem ersten Verbundbereich so angeordnet ist, dass die Grenzfläche zwischen den Verbundbereichen abschnittsweise gekrümmt verläuft;
- Fig. 12: einen Körper in perspektivischer, schematischer Ansicht, auf dem ein abschnittsweise mehrschichtiger Materialverbund haftend angeordnet ist;
- Fig. 13: einen vierlagigen Materialverbund mit einem Substrat und einem Außen-Verbundbereich in schematischer Schnittdarstellung;
- Fig. 14: eine schematische Schnittdarstellung durch einen dreischichtigen Materialverbund mit einem Substrat;
- Fig. 15: eine schematische Darstellung einer Verpackung in Schnittansicht; und
- Fig. 16: eine schematische Darstellung eines Materialverbunds mit einer einen Wirkstoff umfassenden Grenzschicht.

### DETAILLIERTE BESCHREIBUNG VON AUSFÜHRUNGSBEISPIELEN

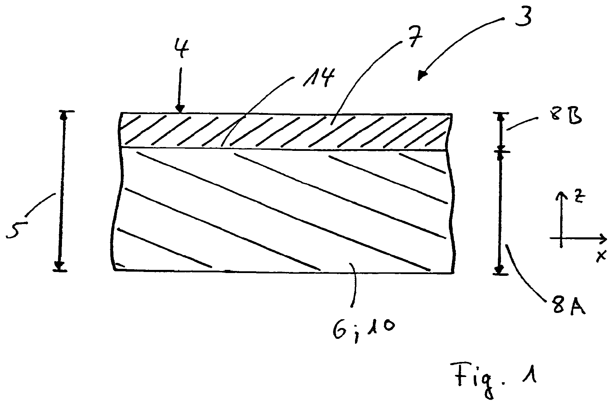

Der Fig. 1 kann schematisch ein auf einer Oberfläche eines Körpers wie etwa einer Verpackung oder einem Gehäuse anhaftbarer, insbesondere adhäsiver, Materialverbund 3 mit einer flächenhaften Ausdehnung, einer Verbundfläche 4, die sich in einer ersten Richtung x und in einer zu der ersten Richtung x im Wesentlichen senkrecht verlaufenden zweiten Richtung (y) erstreckt, und mit einer Verbunddicke 5, welche sich in eine dritte Richtung z erstreckt, die zur Verbundfläche 4 im Wesentlichen senkrecht verläuft. Der Materialverbund 3 ist aus einem ersten Verbundbereich 6 und einem zumindest abschnittsweise an den ersten Verbundbereich 6 angrenzenden zweiten Verbundbereich 7 gebildet. Der zweite Verbundbereich 7 weist haftende Eigenschaften auf, so dass der Materialverbund 3 mit der Verbundfläche 4 an einer Oberfläche eines Körpers anhaftbar, insbesondere wiederablösbar anhaftbar, ist.

Gemäß Fig. 1 ist der Materialverbund trägerlos gebildet. Der erste Verbundbereich 6 des Materialverbunds 3 weist haftende Eigenschaften auf. Insbesondere der zweite Verbundbereich 7 umfasst einen Klebstoff. Der Klebstoff kann beispielsweise aus einem reaktivierbaren Heißschmelzklebstoff gebildet sein. Der erste Verbundbereich 6 weist eine sich im Wesentlichen parallel zur dritten Richtung z erstreckenden Verbundbereichsdicke 8A auf, mit der die oberflächenhaftende Wirkung des zweiten Verbundbereichs 7 funktionell unterstützt wird. Die Haftungseigenschaften des Materialverbunds 3 auf der Oberfläche des Körpers sind dadurch optimiert, dass der zweite Verbundbereich 7 aus einem Werkstoff gebildet ist, dessen Zusammensetzung auf den Werkstoff abgestimmt ist, aus dem die Oberfläche 1 des Körpers 2 gebildet ist. Die Haftungseigenschaften umfassen dabei die Haftungsstärke, die Haftungsgeschwindigkeit, den Haftungsbildungsdruck, die Haftungsdauer, den Haftungsaufwand und/oder die Wiederablösbarkeit des Materialverbunds 3. Im Hinblick auf die Herstellung insbesondere sehr dünner Verbundbereiche 6, 7 ist es vorteilhaft, wenn der erste 6 und der zweite Verbundbereich 7 flächig extrudiert sind. Bei der Extrusion beider Verbundbereiche 6, 7 eignet sich zur kostengünstigen Herstellung des Materialverbunds 3 die Koextrusion.

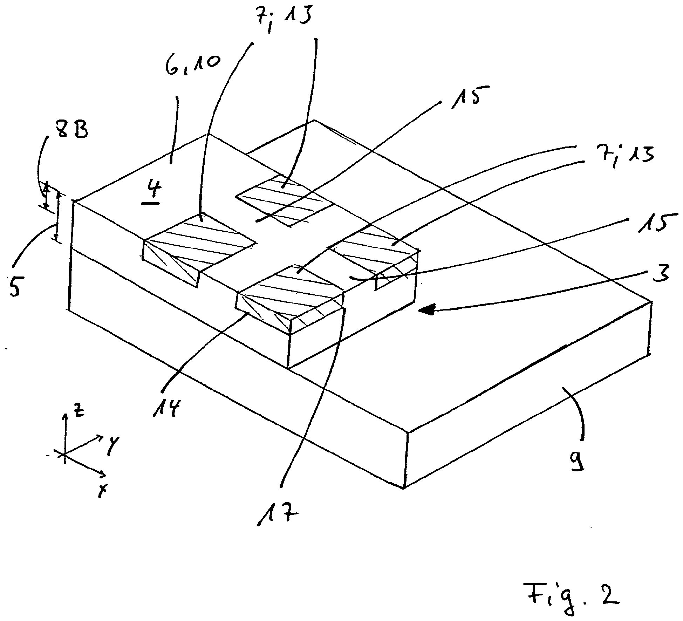

Eine perspektivische, schematische Ansicht eines Materialverbunds 3 kann der Fig. 2 entnommen werden. Demnach ist der Materialverbund 3 auf einem Träger oder einem Substrat 9 angeordnet. Der Fig. 2 kann auch entnommen werden, dass der erste Verbundbereich 6 als Schicht 10 des Materialverbunds 3 gebildet ist. Die Schicht 10 weist eine flächenhafte Ausdehnung auf, welche im Wesentlichen parallel zur flächenhaften Ausdehnung des Materialverbunds 3 orientiert ist. Die Schicht 10 ist im Wesentlichen flächengleich mit der flächigen Ausdehnung des Materialverbunds 3.

Der in Fig. 2 dargestellte Materialverbund 3 ist so beschaffen, dass auf dem Materialverbund 3 eine Kennzeichnung aufbringbar ist, wodurch der Materialverbund 3 als Haftmittel für die auf der Oberfläche des Körpers anhaftbare Kennzeichnung dient.

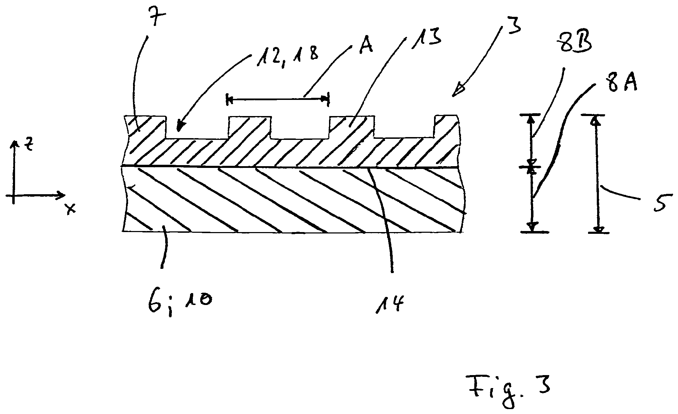

Der Fig. 3 kann ein Vertikalschnitt durch einen Materialverbund 3 mit alternativer Ausgestaltung zumindest schematisch entnommen werden. Demnach ist der zweite Verbundbereich 7 auf dem ersten Verbundbereich 6 aufgeschichtet, wodurch der Materialverbund 3 über der gesamten Verbundbreite (und wahlweise auch über der gesamten Verbundlänge) mehrschichtig ist. In der Fig. 3 ist auch zu erkennen, dass die Verbundbereichsdicke 8 des zweiten Verbundbereichs 7 abschnittsweise entlang der ersten Richtung x variiert. An den Stellen, wo der zweite Verbundbereich 7 hinsichtlich der Verbundbereichsdicke 8B eine Schwächung 12 aufweist, entspricht die Summe der Verbundbereichsdicken 8A und B höchstens der Verbunddicke 5 des Materialverbunds 3, gemäß Fig. 3 ist sie dort kleiner als die Verbunddicke 5. An den Stellen, wo der zweite Verbundbereich 7 keine Schwächung 12 aufweist, entspricht die Summe der Verbundbereichsdicken 8 der Verbunddicke 5.

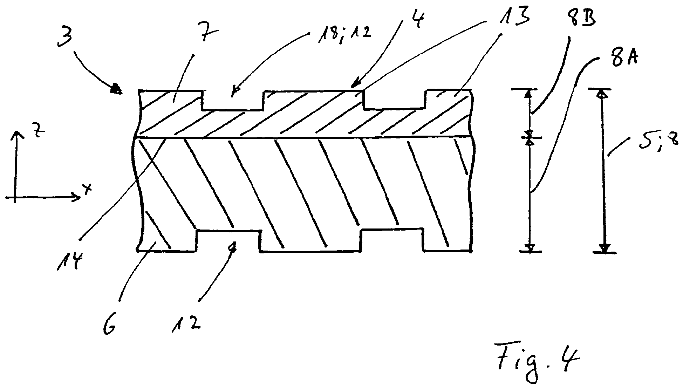

Die Fig. 4 zeigt - ebenfalls schematisch - einen Materialverbund 3, bei dem der zweite Verbundbereich 7 auf dem ersten Verbundbereich 6 so aufgeschichtet ist, dass die Verbundbereichsdicke 8 des ersten und des zweiten Verbundbereichs 6, 7 abschnittsweise entlang der ersten Richtung variiert. Es weisen demnach beide Verbundbereiche 6, 7 Schwächungen 12 auf. Gemäß Fig. 4 sind die Schwächungen 12 des ersten Verbundbereichs 6 gegenüber von den Schwächungen 12 des zweiten Verbundbereichs 7 angeordnet. Alternativ können die Schwächungen 12 des ersten Verbundbereichs 6 in der ersten oder in der zweiten Richtung (x, y) einen Versatz aufweisen, was in Fig. 4 nicht dargestellt ist.

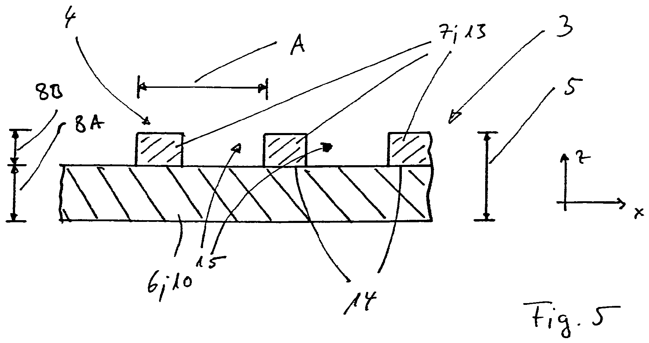

Fig. 5 zeigt ebenfalls einen Schnitt in vertikaler Richtung (z) durch einen Materialverbund 3 mit einem ersten, schichtartigen Verbundbereich 6 und einem zweiten Verbundbereich 7. Der Materialverbund 3 gemäß Fig. 5 weist mehrere streifenartige Abschnitte 13 des zweiten Verbundbereichs 7 auf, in denen der erste und der zweite Verbundbereich 6, 7 entlang einer Grenzfläche 14 aneinander angrenzen. Wahlweise können sich die Abschnitte 13 in der ersten Richtung x über einen größeren Bereich erstrecken, wodurch die Abschnitte weniger streifenartig sondern vielmehr flächenartig wären (nicht dargestellt in Fig. 5). Der Fig. 5 kann entnommen werden, dass die Grenzfläche 14 im Wesentlichen parallel zu der Verbundfläche 4 verläuft.

In der Fig. 5 ist zu sehen, dass im Bereich der Abschnitte 13 die Verbunddicke 5 durch die Summe der Verbundbereichsdicken 8 des ersten und des zweiten Verbundbereichs 6, 7 gebildet wird. Somit entspricht die Verbunddicke 5 abschnittsweise der Summe der Verbundbereichsdicken 8. Zwischen den Abschnitten 13 weist der zweite Verbundbereich 7 Unterbrechungen 15 auf, wo der zweite Verbundbereich 7 eine Verbundbereichsdicke 8 von etwa 0 µm aufweist. Fig. 5 zeigt, dass die Abschnitte 13 ein im Wesentlichen regelmäßiges Muster bilden, bei dem ein erster Abschnitt 13 zu einem zweiten Abschnitt 13 entlang der ersten Richtung x einen im Wesentlichen konstanten Abstand A aufweist.

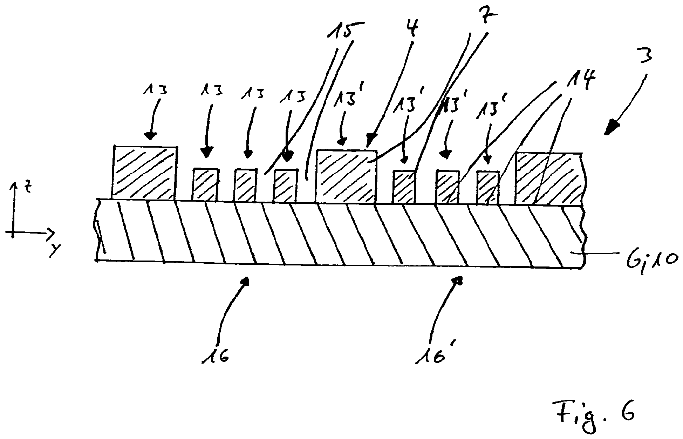

Einen Materialverbund 3 mit einem zweiten Verbundbereich 7, der eine Gruppe 16 von Abschnitten 13 aufweist, kann der Fig. 6 entnommen werden. Demnach bilden die Abschnitte 13 ein im Wesentlichen regelmäßiges Muster, bei dem eine erste Gruppe von Abschnitten 16 zu mindestens einer zweiten Gruppe von Abschnitten 16' entlang der ersten Richtung x einen im Wesentlichen konstanten Abstand aufweisen. Zwischen den Abschnitten 13 und zwischen den Gruppen von Abschnitten 16, 16' weist der zweite Verbundbereich 7 jeweils Unterbrechungen auf. Alternativ können anstelle der Unterbrechungen auch Materialschwächungen vorgesehen sein.

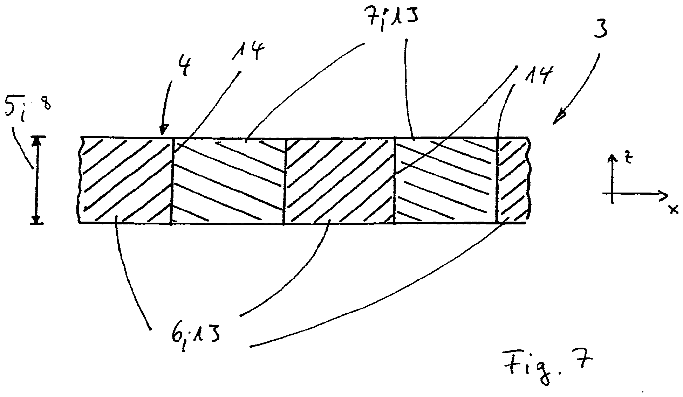

Fig. 7 zeigt einen Vertikalschnitt durch einen Materialverbund 3 mit einer alternativen Anordnung der Verbundbereiche 6, 7. Gemäß Fig. 7 sind die Verbundbereiche 6, 7 abschnittsweise so angeordnet, dass die Grenzflächen 14 im Wesentlichen vertikal, d. h. entlang der zweiten Richtung y verlaufen. Jede Grenzfläche 14 verläuft im Wesentlichen senkrecht zu der Verbundfläche 4. Dadurch werden abwechselnd Abschnitte gebildet, in denen der erste und der zweite Verbundbereich 6, 7 entlang der ersten, horizontalen Richtung x nebeneinander und zueinander benachbart angeordnet sind. Die Verbunddicke 5 entspricht gemäß Fig. 7 der Verbundbereichsdicke 8 des ersten und/oder des zweiten Verbundbereichs 6, 7.

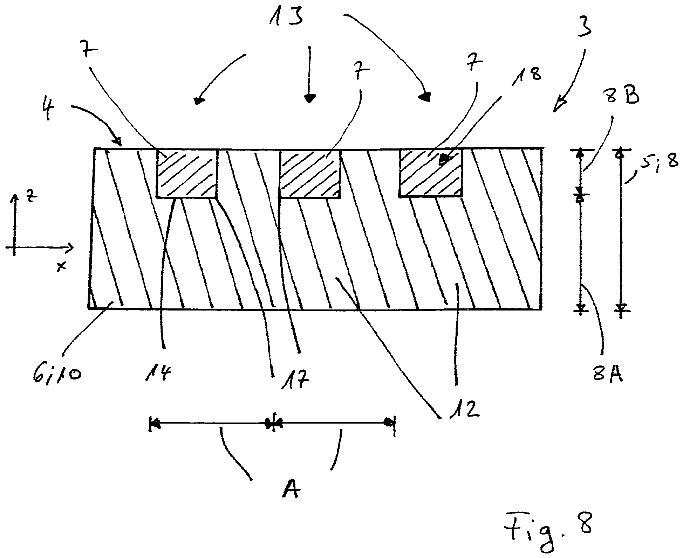

Den Fig. 8 bis 10 können Materialverbunde 3 entnommen werden, bei denen die Grenzflächen 14 abgewinkelte Bereiche 17 aufweisen. Gemäß der Fig. 8 bis 10 haben die Grenzflächen 14 jeweils einen U-förmigen Querschnitt.

Gemäß Fig. 8 sind Abschnitte 13 vorgesehen, in denen der erste Verbundbereich 6 Materialschwächungen 12 aufweist. In diesen Materialschwächungen 12 des ersten Verbundbereichs 6 ist der zweite Verbundbereich 7 so angeordnet, dass entlang der ersten Richtung x ein regelmäßiges Muster beider Verbundbereiche 6, 7 gebildet wird. Die Verbundfläche 4 des Materialverbunds bildet gemäß Fig. 8 eine Ebene, die sich abschnittsweise aus Bereichen des ersten und des zweiten Verbundbereichs 6, 7 zusammensetzt. In den Abschnitten 13 ist der zweite Verbundbereich 7 in den ersten, schichtartigen Verbundbereich 6 eingebettet. Die Verbunddicke 5 wird in den Abschnitten 13 durch die Summe der Verbundbereichsdicken 8 der Verbundbereiche 6, 7 gebildet. Ansonsten, d. h. in den Bereichen der Verbundfläche 4, die zu den Abschnitten 13 benachbart sind, entspricht die Verbunddicke 5 der Verbundbereichsdicke 8 des ersten Verbundbereichs 6.

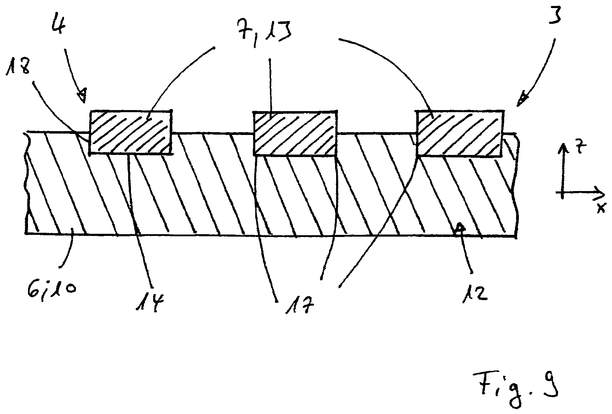

Gemäß Fig. 9 entspricht die Verbunddicke in den Abschnitten 13 mindestens der Summe der Verbundbereichsdicken des ersten und des zweiten Verbundbereichs 6, 7. In den Bereichen, die zu den Abschnitten 13 benachbart sind, d. h. dort, wo der zweite Verbundbereich 7 eine Unterbrechung aufweist, ist die Verbunddicke größer als die Verbundbereichsdicke des ersten Verbundbereichs 6. In den Abschnitten 13 ragt der zweite Verbundbereich 7 aus der Verbundfläche 4 heraus, wodurch die Verbundfläche 4 keine planare Fläche bildet sondern vielmehr eine Struktur aufweist. Die Struktur ist durch die musterartige Anordnung der Abschnitte 13 des zweiten Verbundbereichs 7 gekennzeichnet. Sie ermöglicht bei Bedarf und bei entsprechender Beschaffenheit der beteiligten (Kontakt-)Flächen (1, 4) eine bessere Anpassung der Verbundfläche 4 an die Oberfläche des zu beklebenden Körpers.

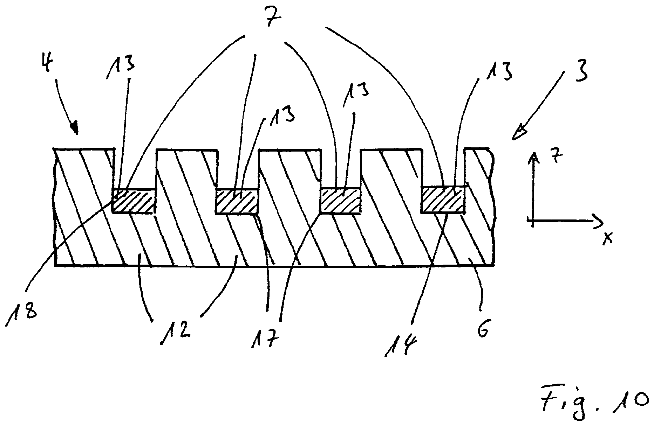

Fig. 10 zeigt ebenfalls einen Vertikalschnitt durch einen Materialverbund 3. In den Abschnitten 13 ist die Summe der Verbundbereichsdicken des ersten und des zweiten Verbundbereichs 6, 7 geringer als die Verbunddicke, wodurch die Verbundfläche 4 in den Abschnitten 13 Ausnehmungen 18 aufweist. Die Ausnehmungen 18 sind in Materialschwächungen 12 des ersten Verbundbereichs 6 angeordnet. Zwischen den Materialschwächungen 12 des ersten Verbundbereichs 6, d. h. in den Bereichen, die zu den Abschnitten 13 benachbart sind, entspricht die Verbunddicke im Wesentlichen der Verbundbereichsdicke des ersten Verbundbereichs 6. Auch durch die Ausnehmungen 18 erhält die Verbundfläche 4 gemäß Fig. 10 eine strukturierte Oberfläche, die eine bessere Anpassung an die Oberfläche 1 des zu beklebenden Körpers 2 gestattet.

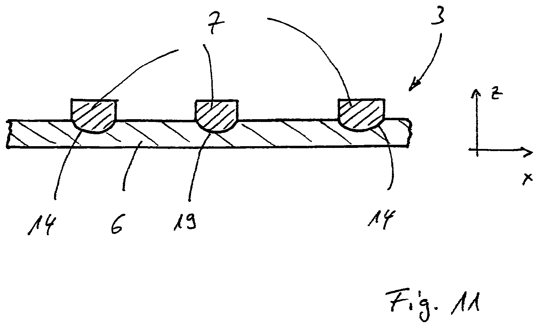

Eine Schnittansicht eines Materialverbunds 3 mit einer zumindest bereichsweise gekrümmten Grenzflächen 14 kann der Fig. 11 entnommen werden. Die dort dargestellte Krümmung 19 der Grenzfläche 14 hat im Querschnitt einen balligen respektive konkaven Verlauf. D. h. die Krümmung 19 ist so angeordnet, dass die Grenzfläche 14 in den ersten Verbundbereich 6 hineinragt. In Fig. 11 nicht dargestellt ist eine Grenzfläche 14 mit einer zumindest abschnittsweise konvex oder bauchig verlaufenden Krümmung 19, die aus dem ersten Verbundbereich 6 hinausragt und in den zweiten Verbundbereich 7 hineinragt.

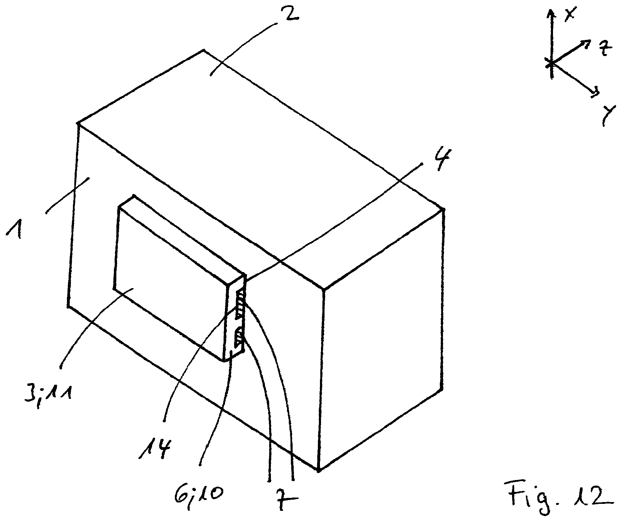

Fig. 12 zeigt eine schematische und perspektivische Ansicht eines Körpers 2, auf dessen Oberfläche 1 ein Materialverbund 3 als Kennzeichnung 11 haftend angeordnet ist. Der als Kennzeichnung 11 dienende Materialverbund 3 dient zum Kennzeichnen oder Identifizieren des Körpers 2. Bei dem Körper 2 kann es sich beispielsweise um eine Verpackung oder ein Gehäuse eines Gerätes handeln. Durch die Kennzeichnung 11 wird ein Benutzer beispielsweise auf den Inhalt der Verpackung oder die Eigenschaften des Gerätes aufmerksam gemacht. Daher ist es vorteilhaft, wenn der Materialverbund 3 bedruckt oder beschriftet ist. Soll die Verpackung mehrmals wiederverwendet werden, kann es zweckmäßig sein, wenn die Kennzeichnung 11 wiederablösbar ist.

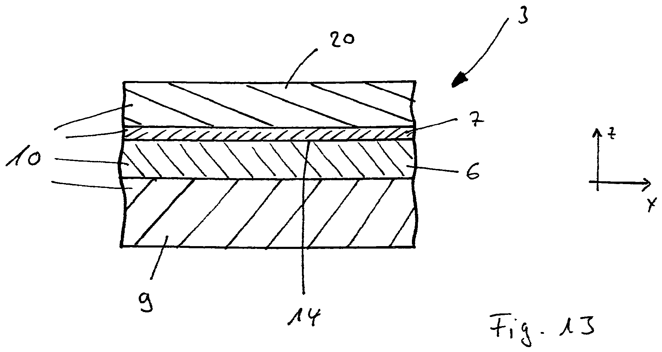

Der Fig. 13 kann eine schematische Darstellung eines vierlagigen Materialverbunds 3 entnommen werden. Auf dem beispielsweise einen Klebstoff umfassenden zweiten Verbundbereich 7 ist ein (bevorzugt nicht klebender) Außenverbundbereich 20 angeordnet. Der unter dem zweiten (klebenden) Verbundbereich 7 angeordnete erste Verbundbereich 6 ist auf einem Substrat 9 haftend angeordnet, wobei es zweckmäßig ist, dass auch der erste Verbundbereich einen Klebstoff umfasst. Bei dem Substrat 9 kann es sich beispielsweise um einen Releaseliner oder um eine Kunststofffolie handeln. Der Außen-Verbundbereich 20 kann beispielsweise aus einem Faserwerkstoff gebildet sein, wodurch sich der Materialverbund 3 gemäß Fig. 13 für eine Fasertapete eignet. Insbesondere kann der Außen-Verbundbereich 20 bedruckt oder bedruckbar sein, wodurch sich der Verbund 3 alternativ für eine Kennzeichnung eines Körpers 2 (nicht dargestellt in Fig. 13) eignet.

Die Herstellung des Verbunds 3 gemäß Fig. 13 kann etwa so erfolgen, dass der erste und der zweite Verbundbereich 6, 7 als schmelzflüssige Heißschmelzklebstoffe auf das Substrat 9 koextrudiert werden, d. h. die Extrusion beider Heißschmelzklebstoffe erfolgt durch eine, für die eine gemeinsame Extrusion geeignete Düse. Dabei kann es vorteilhaft sein, wenn das Substrat 9 zumindest abschnittsweise gekühlt wird. Die Heißschmelzklebstoffe sind unterschiedlich formuliert respektive haben unterschiedliche Klebstoffbestandteile, so dass die Haftung des ersten Verbundbereichs 6 auf dem Substrat 9 besonders vorteilhaft ist. Die Anordnung des Außen-Verbundbereichs 20 erfolgt vorzugsweise mechanisch, insbesondere jedoch "Inline", d. h. unmittelbar nach der Koextrusion innerhalb der für die Extrusion bestimmten Vorrichtung. Der Außen-Verbundbereich 20 haftet auf dem zweiten Verbundbereich 7, die Formulierung des Klebstoffs in dem zweiten Verbundbereich 7 ist auf die Haftung mit dem Außen-Verbundbereich 20 abgestimmt. Die Haftung des Außen-Verbundbereichs 20 kann beispielsweise durch die Wirkung einer oder mehrerer Walzen, die auf den Materialverbund 3 einen mechanischen Druck ausüben, vereinfacht und/oder verbessert. werden.

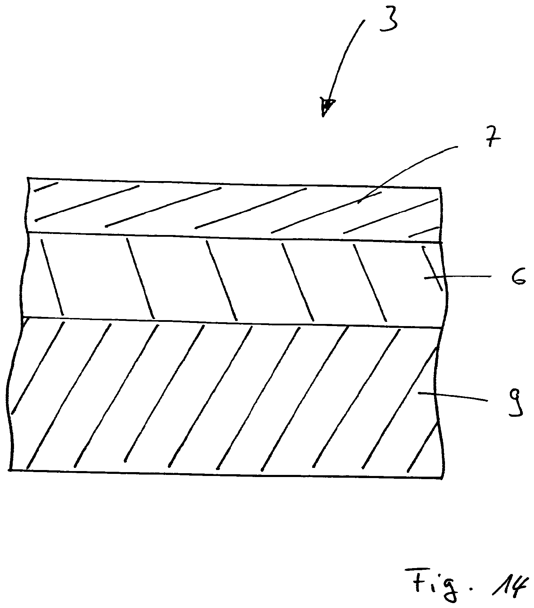

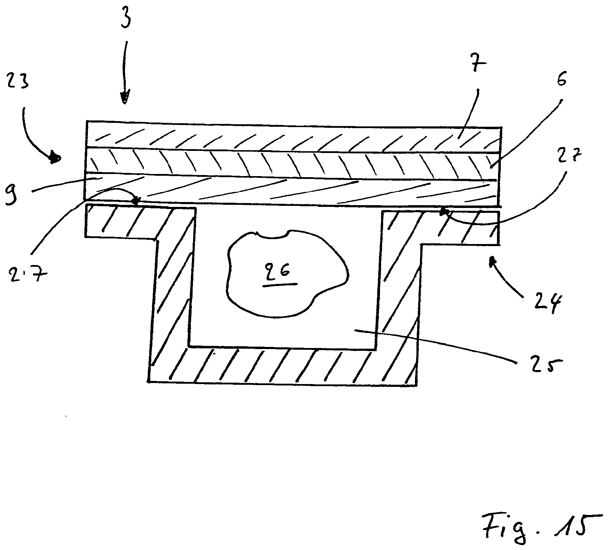

Der Fig. 14 ist eine weiter Alternative des erfindungsgemäßen Materialverbunds zu entnehmen, wie sie beispielsweise in der Verpackungstechnik Verwendung finden kann. Dort ist schematisch ein Schnitt durch die Oberfolie einer Verpackung dargestellt, wobei die Verpackung schematisch in Fig. 15 abgebildet ist. Die Oberfolie gemäß Fig. 14 umfasst einen ersten Verbundbereich 6, der der aus einem Heißschmelzklebstoff, beispielsweise aus einem drucksensitiven Klebstoff (Pressure Sensitive Adhesive, PSA) gebildet ist. Der Verbundbereich 6 kann beispielsweise eine Dicke von etwa 10 µm bis etwa 20 µm aufweisen. Der Verbundbereich 6 ist auf einem Substrat 9 angeordnet, welches aus einer amorphen Polyethylenterephthalat-Folie (APET-Folie) mit einer Stärke von beispielsweise etwa 15 µm bis etwa 25 µm besteht. Auf dem ersten Verbundbereich 6 ist der zweite Verbundbereich 7 angeordnet, der beispielsweise aus einem folienartigen Klebstoff mit einer Dicke von etwa 10 µm bestehen kann. Der folienartige Klebstoff des zweiten Verbundbereichs 7 ist für den Kontakt mit Lebensmitteln geeignet.

Eine Verpackung insbesondere zum Verpacken von Lebensmitteln kann der Fig. 15 schematisch entnommen werden. Die Verpackung umfasst einen als Oberfolie gebildeten ersten Verpackungsbestandteil 23. Die Oberfolie wurde bereits detailliert in Fig. 14 beschrieben. Die Oberfolie ist auf einem als Unterfolie gebildeten zweiten Verpackungsbestandteil 24 angeordnet. Die Unterfolie 24 kann durch Tiefziehen in eine schalenartige Form gebracht werden. Sie kann aus einer APET-Folie bestehen mit einer Schichtdicke von etwa 250 µm bis etwa 400 µm. Es bildet sich ein Hohlraum 25, in dem das Verpackungsgut 26, insbesondere das zu verpackende Lebensmittel untergebracht wird. An den Seiten der Unterfolie 24 sind Kontaktflächen 27 gebildet, wo zwischen der Oberfolie und der Unterfolie 24 ein Kontakt oder zumindest eine Auflagefläche besteht. Nach Abdeckung der tiefgezogenen Schale 24 mit der Oberfolie kann der Verpackung im Bereich der Kontaktfläche 27 thermische Energie zugeführt werden, die zu einer Temperaturerhöhung führt, die vergleichbar mit der beim Heißsiegeln von Kunststoffverpackung verwendeten Temperaturänderungen ist. Dabei schmilzt der folienartige Klebstoff des zweiten Verbundbereichs 7 und verbindet sich mit Abschnitten des zweiten Verpackungsbestandteils 24 im Bereich der Kontaktfläche 27. Diese Verbindung führt zu einem luftdichten Einschluss des Verpackungsguts 26 in der Verpackung.

Dadurch, dass die Verpackung gemäß Fig. 15 mit der Oberfolie gemäß Fig. 14 keine Polyethylen-Schicht (PE-Schicht) umfasst, kann sie deutlich günstiger hergestellt werden, als dies im Stand der Technik gegenwärtig der Fall ist. Außerdem sind die Verpackungsbestandteile gemäß der Figuren 14 und 15 einfacher zu recylen respektive wiederzuverwerten, da sie aus weniger Werkstoffen gebildet sind, die für eine Wiederverwertung zu trennen wären.

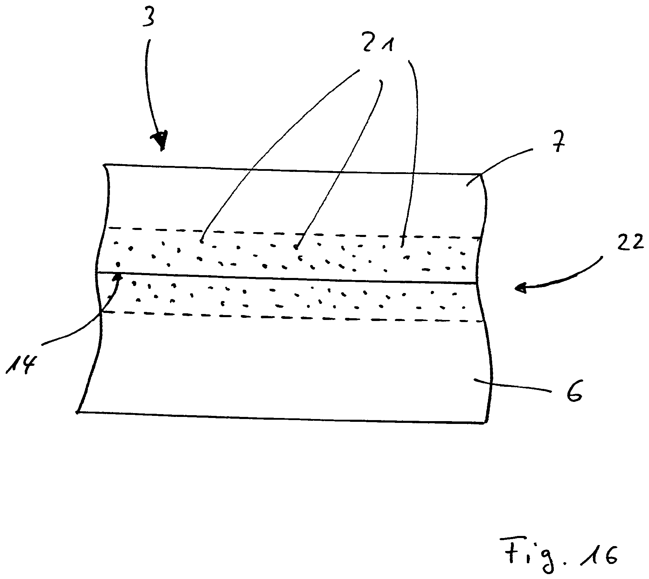

Einen im Hinblick auf die Wiederverwertung von miteinander verklebten, unterschiedlichen Werkstoffen einfach zu fertigenden Materialverbund 3 zum Verkleben dieser unterschiedlichen Werkstoffe kann der Fig. 16 schematisch entnommen werden. Der Verbund 3 gemäß Fig. 16 umfasst einen ersten und einen zweiten Verbundbereich 6, 7, die so beschaffen sind, dass sie auf die zu verklebenden Werkstoffe (nicht dargestellt in Fig. 16) artgerecht und materialgerecht abgestimmt sind. In dem Bereich der Grenzfläche 14 der Verbundbereiche 6, 7 befindet sich eine Grenzschicht 22, in der ein Wirkstoff 21 angeordnet ist. Der Wirkstoff 21 ist aktivierbar und bewirkt eine sortenreine Trennung der zu verklebenden Werkstoffe im Hinblick auf deren Wiederverwertung. Die Aktivierung des Wirkstoffs 21 erfolgt beispielsweise durch einen Energieeintrag, etwa durch Infrarot-Strahlung (IR-Strahlung), durch Ultraschall, durch elektrischen Strom oder durch andere Maßnahmen, die sich auf die Energiebilanz des Wirkstoffs auswirken. Durch die Aktivierung des Wirkstoffs 21 in dem Materialverbund 3 wird erreicht, dass sich die Verbundbereiche 6, 7 voneinander trennen. Insofern bewirkt eine Aktivierung des Wirkstoffs 21, dass der Materialverbund 3 in seine durch die Verbundbereiche 6, 7 gebildeten Verbundbestandteile aufgespalten wird.

Durch die Aktivierung des Wirkstoffs 21 insbesondere in der Grenzschicht 22 und die anschließende Trennung des Materialverbunds 3 werden auch die mit dem Materialverbund 3 verklebten Werkstoffe voneinander getrennt. Nach der Trennung der Werkstoffe, die mit den Verbundbereichen 6, 7 haftend verbunden sind, bleibt der erste Werkstoff mit dem ersten Verbundbereich 6 und der zweite Werkstoff mit dem zweiten Verbundbereich 7 zurück. Da die Verbundbereiche 6, 7 auf die unterschiedlichen Werkstoffe abgestimmt sind, liegen die Werkstoffe nach deren Trennung in einer sehr hohen Sortenreinheit vor, die oberhalb von 99% liegen kann. Es wird daher ein Qualitätsverlust vermieden, der dadurch gegeben sein könnte, dass nach einer für die Wiederverwertung erforderlichen Werkstoff-Trennung getrenntes Material zurückbleibt, welches beispielsweise durch artfremde Klebstoffe derart verunreinigt ist, dass die Sortenreinheit für die Widerverwertung zu niedrig ist.

**BEZUGSZEICHENLISTE**

| | | | |
|---|---|---|---|
| 1 | Oberfläche | 18 | Ausnehmung |
| 2 | Körper | 19 | Krümmung |
| 3 | Materialverbund | 20 | Außen-Verbund bereich |
| 4 | Verbundfläche | 21 | Wirkstoff |
| 5 | Verbunddicke | 22 | Grenzschicht |
| 6 | erster Verbundbereich | 23 | erster Verpackungsbestand-teil |
| 7 | zweiter Verbundbereich | | |
| 8A, 8B | Verbundbereichsdicke | 24 | zweiter Verpackungsbe-standteil |
| 9 | Substrat | | |
| 10 | Schicht | 25 | Hohlraum |
| 11 | Kennzeichnung | 26 | Verpackungsgut |
| 12 | Schwächung | 27 | Kontaktfläche |
| 13, 13' | Abschnitt des Verbundbereichs | x | erste Richtung |
| 14 | Grenzfläche | y | zweite Richtung |
| 15 | Unterbrechung | z | dritte Richtung |
| 16, 16' | Gruppe von Abschnitten | A | Abstand |
| 17 | abgewinkelter Bereich der Grenzfläche | | |

## Patentansprüche

1. Anhaftbarer Materialverbund mit einer flächenhaften Ausdehnung, einer Verbundfläche (4), die sich in einer ersten Richtung (x) und in einer zu der ersten Richtung (x) im Wesentlichen senkrecht verlaufenden zweiten Richtung (y) erstreckt, und mit einer Verbunddicke (5), welche sich in eine dritte Richtung (z) erstreckt, die zur Verbundfläche (4) im Wesentlichen senkrecht verläuft, wobei der Materialverbund (3) aus einem flächig extrudierbaren oder extrudierten ersten Verbund bereich (6) und wenigstens einem flächig extrudierbaren oder extrudierten, vorzugsweise koextrudierten, zumindest abschnittsweise an den ersten Verbundbereich (6) angrenzenden zweiten Verbundbereich (7) gebildet ist, wobei der erste und/oder der zweite Verbundbereich (6, 7) einen Klebstoff umfasst, und wobei der zweite Verbundbereich (7) haftende Eigenschaften aufweist, so dass der Materialverbund (3) mit der Verbundfläche (4) an einer Oberfläche eines Körpers oder an Oberflächen mehrerer Körper anhaftbar ist und wobei der Materialverbund (3) trägerlos gebildet ist, wobei der Klebstoff aus einem insbesondere reaktivierbaren Heißschmelzklebstoff gebildet ist, und wobei eine Verbundbereichsdicke (8) des ersten und/oder zweiten Verbundbereichs (6, 7) abschnittsweise entlang der ersten Richtung (x) variiert.

2. Materialverbund nach Anspruch 1,
**dadurch gekennzeichnet, dass**
die Haftungseigenschaften des Materialverbunds (3) auf der Oberfläche (1) eines Körpers (2) dadurch beeinflussbar sind, dass der erste und/oder der zweite Verbundbereich (6, 7) aus einem Werkstoff gebildet sind, dessen Zusammensetzung auf den Werkstoff abgestimmt ist, aus dem die Oberfläche (1) des Körpers (2) gebildet ist, wobei die Haftungseigenschaften die Haftungsstärke, die Haftungsgeschwindigkeit, den Haftungsbildungsdruck, die Haftungsdauer, den Haftungsaufwand und/oder die Wiederablösbarkeit des Materialverbunds (3) umfassen.

3. Materialverbund nach einem der Ansprüche 1 bis 2,
**gekennzeichnet durch** einen Außen-Verbundbereich (20), der so angeordnet ist, dass der erste und der zweite Verbundbereich (6, 7) zwischen dem Außen-Verbundbereich (20) und dem Substrat (9) angeordnet sind.

4. Materialverbund nach Anspruch 3,
**dadurch gekennzeichnet, dass**
der Außen-Verbundbereich (20) zumindest abschnittsweise haftend auf dem zweiten Verbundbereich (7) angeordnet ist.

5. Materialverbund nach einem der Ansprüche 1 bis 4 zum Erzeugen einer insbesondere dauerhaft haftenden Verbindung zumindest eines ersten Werkstoffs an zumindest einem zweiten Werkstoff, bei dem der erste Verbundbereich (6) an dem ersten Werkstoff haftet und der zweite Verbundbereich (7) an dem zweiten Werkstoff, **dadurch gekennzeichnet, dass** die Verbundbereiche (6, 7) des Materialverbunds (3) nach dem Erzeugen der Verbindung beider Werkstoffe derart trennbar sind, dass die Werkstoffe, an denen die Verbundbereiche (6, 7) anhaften, nach der Trennung der Verbundbereiche (6, 7) eine für eine Wiederverwertung der Werkstoffe ausreichende Sortenreinheit aufweisen.

6. Materialverbund nach Anspruch 5,
**gekennzeichnet durch** einen aktivierbaren Wirkstoff (21), der beim Aktivieren das Trennen der Verbundbereiche (6, 7) bewirkt.

7. Materialverbund nach Anspruch 6,
**dadurch gekennzeichnet, dass**
der Wirkstoff (21) im Bereich der Grenzfläche (14) der Verbundbereiche (6, 7) des Materialverbunds (3) angeordnet ist.

8. Materialverbund nach Anspruch 6 oder 7,
**gekennzeichnet durch** eine den Wirkstoff (21) umfassende Grenzschicht (22), die in dem Bereich zwischen dem ersten Verbundbereich (6) und dem zweiten Verbundbereich (7) angeordnet ist.

9. Materialverbund nach einem der Ansprüche 6 bis 8,
**dadurch gekennzeichnet, dass**
der Wirkstoff (21) durch Verändern der Energiebilanz des Wirkstoffs (21) aktivierbar ist, etwa durch einen Energieeintrag in den Wirkstoff (21), insbesondere durch elektrische Energie, thermische Energie, Strahlungsenergie, Schallenergie oder Kombinationen daraus.

10. Materialverbund nach einem der Ansprüche 1 bis 9,
**dadurch gekennzeichnet, dass**
der Materialverbund (3) zur Kennzeichnung (11) oder Identifizierung des Körpers (2) dient, auf dessen Oberfläche (1) der Materialverbund anhaftbar ist und auf einem Zylinder oder auf einer Rolle aufwickelbar und/oder von einem Zylinder oder einer Rolle abwickelbar ist.

11. Materialverbund nach einem der Ansprüche 1 bis 10,
**dadurch gekennzeichnet, dass**
der Materialverbund (3) eine Verpackung oder einen Verpackungsbestandteil (23, 24), insbesondere eine Lebensmittelverpackung oder einen Lebensmittelverpackungsbestandteil bildet.

12. Materialverbund nach Anspruch 11,
**dadurch gekennzeichnet, dass**
die Verpackung einen ersten Verpackungsbestandteil (23) und zumindest einen zweiten Verpackungsbestandteil (24) hat, wobei die Verpackungsbestandteile (23, 24) zumindest abschnittsweise einen oder mehrere vorzugsweise luftdicht abgeschlossene Hohlräume (25) zur Aufnahme des zu verpackenden Verpackungsguts (26) begrenzen, und wobei der erste Verpackungsbestandteil (23) und der zweite Verpackungsbestandteil (24) aus dem Materialverbund (3) gebildet sind, dass der erste Verbundbereich (6) und der zweite Verbundbereich (7) haftende Eigenschaften aufweisen, dass der erste und der zweite Verpackungsbestandteil (23, 24) zumindest abschnittsweise unter Bildung zumindest einer Kontaktfläche (27) sowie eines oder mehrerer vorzugsweise luftdicht abgeschlossener Hohlräume (25) zur Aufnahme des zu verpackenden Verpackungsguts (26) miteinander in Kontakt stehen, und dass der erste Verpackungsbestandteil (23) und der zweite Verpackungsbestandteil (24) durch insbesondere thermischen Energieeintrag im Bereich der Kontaktfläche (27) miteinander verbindbar oder verbunden sind, wobei der Materialverbund (3) ein Substrat (9) aus einer Kunststofffolie umfasst, insbesondere aus einer Polyethylenterephthaiat- Folie(PET-Folie).

13. Materialverbund nach Anspruch 12,
**dadurch gekennzeichnet, dass**
der erste Verbundbereich (6) des Materialverbunds (3) einen Heißschmelzklebstoff umfasst, und dass der zweite Verbundbereich (7) des Materialverbunds (3) einen Klebstoff umfasst, der für einen Lebensmittelkontakt geeignet ist, und der vorzugsweise folienartig gebildet ist.

14. Verfahren zur Herstellung einer Verpackung,
umfassend einen ersten Verpackungsbestandteil (23) und zumindest einen zweiten Verpackungsbestandteil (24), bei dem die Verpackungsbestandteile (23, 24) zumindest abschnittsweise einen oder mehrere vorzugsweise luftdicht abgeschlossene Hohlräume (25) zur Aufnahme des zu verpackenden Verpackungsguts (26) begrenzen, **dadurch gekennzeichnet, dass** der erste und/oder der zweite Verpackungsbestandteil (23, 24) aus einem Materialverbund (3) nach einem der Ansprüche 1 bis 13 gebildet sind/ist, dass der erste und der zweite Verpackungsbestandteil (23, 24) zumindest abschnittsweise unter Bildung zumindest einer Kontaktfläche (27) sowie eines oder mehrerer vorzugsweise luftdicht abgeschlossener Hohlräume (26) zur Aufnahme des zu verpackenden Verpackungsguts (26) miteinander in Kontakt gebracht werden, und dass der erste Verpackungsbestandteil (23) und der zweite Verpackungsbestandteil (24) durch insbesondere thermischen Energieeintrag im Bereich der Kontaktfläche (27) miteinander vorzugsweise luftdicht verbunden werden.

## Claims

1. An adhesive material composite having a planar extension, a composite surface (4) that extends in a first direction (x) and in a second direction (y) that is substantially perpendicular to the first direction (x), and having a composite thickness (5), which extends in a third direction (z) that is substantially perpendicular to the composite surface (4), wherein the material composite (3) is formed from a laminarly extrudable or extruded first composite area (6) and at least one laminarly extrudable or extruded, preferably co-extruded second composite area (7) at least partially adjacent to the first composite area (6), wherein the first and/or the second composite area (6, 7) comprises an adhesive, and wherein the second composite area (7) has adhesive properties, so that the material composite (3) having the composite surface (4) can adhere to a surface of a body or to surfaces of a plurality of bodies, and wherein the material composite (3) is formed without a carrier, wherein the adhesive is formed from in particular a reactivatable heat-melting adhesive, and wherein a composite area thickness (8) of the first and/or second composite area (6, 7) varies partially along the first direction (x).

2. The material composite according to claim 1, **characterized in that**
the adhesive properties of the material composite (3) on the surface (1) of a body (2) can thereby be influenced, **in that** the first and/or the second composite area (6, 7) is formed from a material, the composition of which is tuned to the material, from which the surface (1) of the body (2) is formed, wherein the adhesive properties comprises adhesion strength, adhesion speed, adhesion pressure, adhesion duration, adhesion effort and/or releasability of the material composite (3).

3. The material composite according to one of claims 1 to 2,
**characterized by** an external composite area (20) that is arranged such that the first and second composite areas (6, 7) are arranged between the external composite area (20) and the substrate (9).

4. The material composite according to claim 3, **characterized in that**
the external composite area (20) is arranged at least partially adhesively on the second composite area (7).

5. The material composite according to any one of claims 1 to 4 for generating a particularly permanently adhering connection of at least one first material to at least one second material, in which the first composite area (6) adheres to the first material and the second composite area (7) adheres to the second material, **characterized in that** the composite areas (6, 7) of the material composite (3) can be separated after the generation of the connection of both materials, and **in that** the materials to which the composite areas (6, 7) adhere, after separation of the composite areas, (6, 7) have a sufficient purity for a recycling of the materials.

6. The material composite according to claim 5, **characterized by** an activatable active ingredient (21) that, when activated, causes separation of the composite areas (6, 7).

7. The material composite according to claim 6, **characterized in that**
the active ingredient (21) is arranged in the area of the interface (14) of the composite areas (6, 7) of the material composite (3).

8. The material composite according to claim 6 or 7, **characterized by** a boundary layer (22) comprising the active ingredient (21) that is arranged in the area between the first composite area (6) and the second composite area (7).

9. The material composite according to any one of claims 6 to 8,
**characterized in that**
the active ingredient (21) can be activated by changing the energy balance of the active ingredient (21), for example by an energy input into the active ingredient (21), in particular by electrical energy, thermal energy, radiation energy, sonic energy, or combinations thereof.

10. The material composite according to any one of claims 1 to 9,
**characterized in that**
the material composite (3) serves to mark (11) or identify the body (2), to the surface of which the material composite (1) can adhere, and can be wound on a cylinder or a roller and/or unwound from a cylinder or roller.

11. The material composite according to any one of claims 1 to 10,
**characterized in that**
the material composite (3) forms a package or a packaging component (23, 24), in particular a food package or a food packaging component.

12. The material composite according to claim 11, **characterized in that**
the package has a first packaging component (23) and at least one second packaging component (24), wherein the packaging components (23, 24) border, at least partially, one or more preferably airtight closed cavities (25) for receiving the packaging material (26) to be packaged, and wherein the first packaging component (23) and the second packaging component (24) are formed from the material composite (3), **in that** the first composite area (6) and the second composite area (7) have adhesive properties, **in that** the first and second packaging components (23, 24) are in contact with one another at least partially, with the formation of at least one contact surface (27) and one or more preferably airtight closed cavities (25) for receiving the packaging material (26) to be packaged, and **in that** the first packaging component (23) and the second packaging component (24) are connectable or connected to one another by in particular thermal energy input in the area of the contact surface (27), wherein the material composite (3) comprises a substrate (9) of a plastic film, in particular of a polyethylene terephthalate film (PET film).

13. The material composite according to claim 12, **characterized in that**
the first composite area (6) of the material composite (3) comprises a heat-melting adhesive, and **in that** the second composite area (7) of the material composite (3) comprises an adhesive, which is suitable for food contact and which is preferably formed in a film-like manner.

14. A method of making a package,
comprising a first packaging component (23) and at least a second packaging component (24), where the packaging components (23, 24) border, at least partially, one or more preferably airtight closed cavities (25) for receiving the packaging material (26) to be packaged, **characterized in that** the first and/or the second packaging component (23, 24) are/is formed from the material composite (3) according to any one of claims 1 to 13, **in that** the first and second packaging components (23, 24) are brought into contact with to one another at least partially with the formation of at least one contact surface (27) and one or more preferably airtight closed cavities (26) for receiving the packaging material (26) to be packaged, and **in that** the first packaging component (23) and the second packaging component (24) are preferably airtightly connected to one another by in particular thermal energy input in the area of the contact surface (27).

## Revendications

1. Matériau composite adhésif ayant une extension plane, une surface composite (4) qui s'étend dans une première direction (x) et dans une deuxième direction (y) qui est sensiblement perpendiculaire à la première direction (x), et ayant une épaisseur composite (5), qui s'étend dans une troisième direction (z) qui est sensiblement perpendiculaire à la surface composite (4), dans lequel le matériau composite (3) est formé à partir d'une première zone composite extrudable de manière laminaire ou extrudée (6) et d'au moins une deuxième zone composite extrudable de manière laminaire ou extrudée, de préférence co-extrudée (7) au moins partiellement adjacente à la première zone composite (6), dans lequel la première et/ou la deuxième zone composite (6, 7) comprend un adhésif, et dans lequel la deuxième zone composite (7) a des propriétés adhésives, afin que le matériau composite (3) ayant la surface composite (4) puisse adhérer à une surface d'un corps ou à des surfaces d'une pluralité de corps, et dans lequel le matériau composite (3) est formé sans support, dans lequel l'adhésif est formé à partir en particulier d'un adhésif thermofusible réactivable, et dans lequel une épaisseur de zone composite (8) de la première et/ou de la deuxième zone composite (6, 7) varie partiellement selon la première direction (x).

2. Matériau composite selon la revendication 1, **caractérisé en ce que**
les propriétés adhésives du matériau composite (3) sur la surface (1) d'un corps (2) peuvent ainsi être influencées, **en ce que** la première et/ou la deuxième zone composite (6, 7) est formée à partir d'un matériau, dont la composition est accordée au matériau, à partir duquel la surface (1) du corps (2) est formée, dans lequel les propriétés adhésives comprennent la force d'adhésion, la vitesse d'adhésion, la pression d'adhésion, la durée d'adhésion, l'effort d'adhésion et/ou l'aptitude au détachement du matériau composite (3) .

3. Matériau composite selon l'une quelconque des revendications 1 à 2,
**caractérisé par** une zone composite externe (20) qui est agencée de sorte que les première et deuxième zones composites (6, 7) sont agencées entre la zone composite externe (20) et le substrat (9).

4. Matériau composite selon la revendication 3, **caractérisé en ce que**
la zone composite externe (20) est agencée au moins partiellement de manière adhésive sur la deuxième zone composite (7).

5. Matériau composite selon l'une quelconque des revendications 1 à 4 pour la génération d'une liaison d'adhésion particulièrement durable d'au moins un premier matériau avec au moins un deuxième matériau. dans lequel la première zone composite (6) adhère au premier matériau et la deuxième zone composite (7) adhère au deuxième matériau, **caractérisé en ce que** les zones composites (6, 7) du matériau composite (3) peuvent être séparées après la génération de la liaison des deux matériaux, et **en ce que** les matériaux auxquels les zones composites (6, 7) adhèrent, après séparation des zones composites, (6, 7) ont une pureté suffisante pour un recyclage des matériaux.

6. Matériau composite selon la revendication 5, **caractérisé par** un principe actif activable (21) qui, lorsqu'il est activé, amène une séparation des zones composites (6, 7).

7. Matériau composite selon la revendication 6, **caractérisé en ce que**
le principe actif (21) est agencé dans la zone de l'interface (14) des zones composites (6, 7) du matériau composite (3).

8. Matériau composite selon la revendication 6 ou 7, **caractérisé par** une couche limite (22) comprenant le principe actif (21) qui est agencée dans la zone entre la première zone composite (6) et la deuxième zone composite (7).

9. Matériau composite selon l'une quelconque des revendications 6 à 8,
**caractérisé en ce que**
le principe actif (21) peut être activé par la modification de la balance énergétique du principe actif (21), par exemple par un apport énergétique dans le principe actif (21), en particulier par de l'énergie électrique, de l'énergie thermique, de l'énergie de rayonnement, de l'énergie sonique, ou des combinaisons de celles-ci.

10. Matériau composite selon l'une quelconque des revendications 1 à 9,
**caractérisé en ce que**
le matériau composite (3) sert à marquer (11) ou à identifier le corps (2), à la surface duquel le matériau composite (1) peut adhérer, et peut être enroulé sur un cylindre ou un rouleau et/ou déroulé d'un cylindre ou d'un rouleau.

11. Matériau composite selon l'une quelconque des revendications 1 à 10,
**caractérisé en ce que**
le matériau composite (3) forme un emballage ou un élément d'emballage (23, 24), en particulier un emballage alimentaire ou un élément d'emballage alimentaire.

12. Matériau composite selon la revendication 11, **caractérisé en ce que**
l'emballage a un premier élément d'emballage (23) et au moins un deuxième élément d'emballage (24), dans lequel les éléments d'emballage (23, 24) bordent, au moins partiellement, une ou plusieurs cavités fermées de préférence étanches à l'air (25) pour la réception du matériau d'emballage (26) à emballer, et dans lequel le premier élément d'emballage (23) et le deuxième élément d'emballage (24) sont formés à partir du matériau composite (3), **en ce que** la première zone composite (6) et la deuxième zone composite (7) ont des propriétés adhésives, **en ce que** les premier et deuxième éléments d'emballage (23, 24) sont en contact l'un avec l'autre au moins partiellement, avec la formation d'au moins une surface de contact (27) et une ou plusieurs cavités fermées de préférence étanches à l'air (25) pour la réception du matériau d'emballage (26) à emballer, et **en ce que** le premier élément d'emballage (23) et le deuxième élément d'emballage (24) sont connectables ou connectés l'un à l'autre par en particulier une entrée d'énergie thermique dans la zone de la surface de contact (27), dans lequel le matériau composite (3) comprend un substrat (9) d'un film plastique, en particulier d'un film de polyéthylène téréphtalate (film PET).

13. Matériau composite selon la revendication 12, **caractérisé en ce que**
la première zone composite (6) du matériau composite (3) comprend un adhésif thermofusible, et **en ce que** la deuxième zone composite (7) du matériau composite (3) comprend un adhésif, qui est approprié pour un contact alimentaire et qui est de préférence formé sous forme de film.

14. Procédé de fabrication d'un emballage,
comprenant un premier élément d'emballage (23) et au moins un deuxième élément d'emballage (24), où les éléments d'emballage (23, 24) bordent, au moins partiellement, une ou plusieurs cavités fermées de préférence étanches à l'air (25) pour la réception du matériau d'emballage (26) à emballer, **caractérisé en ce que** le premier et/ou le deuxième élément d'emballage (23, 24) est/sont formés à partir du matériau composite (3) selon l'une quelconque des revendications 1 à 13, **en ce que** les premier et deuxième éléments d'emballage (23, 24) sont amenés en contact l'un avec l'autre au moins partiellement avec la formation d'au moins une surface de contact (27) et d'au moins ou plusieurs cavités fermées de préférence étanches à l'air (26) pour la réception du matériau d'emballage (26) à emballer, et **en ce que** le premier élément d'emballage (23) et le deuxième élément d'emballage (24) sont de préférence reliés de manière étanche à l'air l'un à l'autre par en particulier une entrée d'énergie thermique dans la zone de la surface de contact (27).
